# EUROPEAN PATENT APPLICATION

(11) **EP 4 525 322 A1**
(43) Date of publication of application: **19.03.2025**
(21) Application number: 22941362.0
(22) Date of filing: 22.07.2022
(51) Int. Cl.: H04B 7/0456, H04W 52/02

(54) **INTELLIGENT METASURFACE PRECODING METHOD AND APPARATUS**

(30) Priority: 11.05.2022 WO PCT/CN2022/092318
(71) Applicant: Beijing Xiaomi Mobile Software Co., Ltd., Beijing 100085 (CN)
(72) Inventor: CHI, Liangang, Beijing 100085 (CN); YANG, Li, Beijing 100085 (CN)
(74) Representative: Dehns Germany Partnerschaft mbB
(86) International application number: PCT/CN2022/107535
(87) International publication number: WO 2023/216419

(57) **Abstract**

The embodiments of the present disclosure disclose an intelligent metasurface precoding method applicable in the technical field of communication, wherein a network device execution method comprises: receiving at least one precoding matrix indicator (PMI) sent by a terminal device and determined according to a reference signal sent by an intelligent metasurface (RIS), and then, based on the at least one PMI, sending precoding indication information to the RIS. A network device can thus control precoding of the RIS on the basis of PMI corresponding to a portion of RIS channels, thereby ensuring accurate RIS precoding while reducing RIS precoding complexity.

## Description

### TECHNICAL FIELD

The present disclosure relates to the field of communication technology, in particular to a Reconfigurable Intelligence Surface (RIS) precoding method and an apparatus.

### BACKGROUND

**In** conventional communication, a wireless environment is an uncontrollable factor, and usually the uncontrollability is adverse to communication efficiency, leading to a decrease in service quality. For example, a propagation distance of a wireless signal is limited by signal attenuation, and signal fading is caused by a multipath effect as well as reflection and refraction of a large object.

**In** the related art, a RIS is deployed on surfaces of various objects in a wireless transmission environment, and the RIS is precoded, so as to reflect a signal reaching the RIS toward a specific direction, thereby to achieve the control of a channel.

### SUMMARY

The present disclosure provides in some embodiments a RIS precoding method and an apparatus. A network device controls the RIS precoding via a PMI corresponding to a part of RIS-based channels, so as to reduce a RIS precoding complexity while ensuring that the RIS is precoded accurately.

In a first aspect, the present disclosure provides in some embodiments a RIS precoding method, executed by a network device, including: receiving a Precoding Matrix Indicator (PMI) sent by at least one terminal device, in which the PMI is determined by the at least one terminal device based on a reference signal sent by a RIS, and sending precoding indication information to the RIS based on the PMI.

In the embodiments of the present disclosure, the network device receives the PMI sent by the at least one terminal device, and the PMI is determined by the at least one terminal device based on the reference signal sent by the RIS. Then, the network device sends the precoding indication information to the RIS based on the PMI. In this way, the network device controls the RIS precoding based on the PMI corresponding to a part of channels for the RIS, so as to reduce a RIS precoding complexity while ensuring that the RIS is precoded accurately.

In a second aspect, the present disclosure provides in some embodiments a RIS precoding method, executed by a RIS, including: receiving precoding indication information sent by a network device, in which the precoding indication information is determined by the network device based on a PMI sent by at least one terminal device, and the PMI is determined by the at least one terminal device based on a reference signal sent by the RIS; and performing a signal reflection and transmission based on the precoding indication information.

In the embodiments of the present disclosure, the RIS receives the precoding indication information sent by the network device, and the precoding indication information is determined based on the PMI sent by the at least one terminal device. Then, the RIS performs the signal reflection and transmission based on the precoding indication information. The PMI is determined by the at least one terminal device based on the reference signal sent by the RIS. In this way, the network device controls the RIS precoding based on the PMI corresponding to a part of channels for the RIS, so as to reduce a RIS precoding complexity while ensuring that the RIS is precoded accurately.

In a third aspect, the present disclosure provides in some embodiments a RIS precoding method, executed by a terminal device, including: receiving a reference signal sent by a RIS; determining a PMI based on the reference signal; and sending the PMI to a network device.

In the embodiments of the present disclosure, the terminal device receives the reference signal sent by the RIS, determines the PMI based on the reference signal, and sends the PMI to the network device. In this way, the network device controls the RIS precoding based on the PMI corresponding to a part of channels for the RIS, so as to reduce a RIS precoding complexity while ensuring that the RIS is precoded accurately.

In a fourth aspect, the present disclosure provides in some embodiments a communication apparatus, including: a transceiver module configured to receive a PMI sent by at least one terminal device, in which the PMI is determined by the at least one terminal device based on a reference signal sent by a RIS; and a processing module configured to send precoding indication information to the RIS based on the PMI.

In a fifth aspect, the present disclosure provides in some embodiments a communication apparatus, including: a transceiver module configured to receive precoding indication information sent by a network device, in which the precoding indication information is determined by a network device based on a PMI sent by at least one terminal device, and the PMI is determined by the at least one terminal device based on a reference signal sent by a RIS; and a processing module configured to perform a signal reflection and transmission based on the precoding indication information.

In a sixth aspect, the present disclosure provides in some embodiments a communication apparatus, including: a transceiver module configured to receive a reference signal sent by a RIS; and a processing module configured to determine a PMI based on the reference signal; in which the transceiver module is further configured to send the PMI to a network device.

In a seventh aspect, the present disclosure provides in some embodiments a communication apparatus, including a processor. The processor is configured to call a computer program in a memory, so as to implement the RIS precoding method in the first aspect.

In an eighth aspect, the present disclosure provides in some embodiments a communication apparatus, including a processor. The processor is configured to call a computer program in a memory, so as to implement the RIS precoding method in the second aspect.

In a ninth aspect, the present disclosure provides in some embodiments a communication apparatus, including a processor. The processor is configured to call a computer program in a memory, so as to implement the RIS precoding method in the third aspect.

In a tenth aspect, the present disclosure provides in some embodiments a communication apparatus, including a processor and a memory storing therein a computer program. The processor is configured to execute the computer program in the memory, so as to implement the RIS precoding method in the first aspect.

In an eleventh aspect, the present disclosure provides in some embodiments a communication apparatus, including a processor and a memory storing therein a computer program. The processor is configured to execute the computer program in the memory, so as to implement the RIS precoding method in the second aspect.

In a twelfth aspect, the present disclosure provides in some embodiments a communication apparatus, including a processor and a memory storing therein a computer program. The processor is configured to execute the computer program in the memory, so as to implement the RIS precoding method in the third aspect.

In a thirteenth aspect, the present disclosure provides in some embodiments a communication apparatus, including a processor and an interface circuit. The interface circuit is configured to receive a code instruction and transmit the code instruction to the processor, and the processor is configured to execute the code instruction so as to implement the RIS precoding method in the first aspect.

In a fourteenth aspect, the present disclosure provides in some embodiments a communication apparatus, including a processor and an interface circuit. The interface circuit is configured to receive a code instruction and transmit the code instruction to the processor, and the processor is configured to execute the code instruction so as to implement the RIS precoding method in the second aspect.

In a fifteenth aspect, the present disclosure provides in some embodiments a communication apparatus, including a processor and an interface circuit. The interface circuit is configured to receive a code instruction and transmit the code instruction to the processor, and the processor is configured to execute the code instruction so as to implement the RIS precoding method in the third aspect.

In a sixteenth aspect, the present disclosure provides in some embodiments a RIS precoding system, including the communication apparatus in the fourth aspect, the communication apparatus in the fifth aspect and the communication apparatus in the sixth aspect, or includes the communication apparatus in the seventh aspect, the communication apparatus in the in the eighth aspect and the communication apparatus in the ninth aspect; or includes the communication apparatus in the tenth aspect, the communication apparatus in the eleventh aspect and the communication apparatus in the twelfth aspect, or includes the communication apparatus in the thirteenth aspect, the communication apparatus in the fourteenth aspect and the communication apparatus in the fifteenth aspect.

In a seventeenth aspect, the present disclosure provides in some embodiments a computer-readable storage medium storing therein an instruction to be used by a terminal device. The instruction is executed so that the terminal device implements the above-mentioned RIS precoding method in the first aspect.

In an eighteenth aspect, the present disclosure provides in some embodiments a readable storage medium storing therein an instruction to be used by a network device. The instruction is executed so that the network device implements the above-mentioned RIS precoding method in the second aspect.

In a nineteenth aspect, the present disclosure provides in some embodiments a readable storage medium storing therein an instruction to be used by a network device. The instruction is executed so that the network device implements the above-mentioned RIS precoding method in the third aspect.

In a twentieth aspect, the present disclosure provides in some embodiments a computer program product including a computer program. The computer program is executed by a computer so that the computer implements the RIS precoding method in the first aspect.

In a twenty-first aspect, the present disclosure provides in some embodiments a computer program product including a computer program. The computer program is executed by a computer so that the computer implements the RIS precoding method in the second aspect.

In a twenty-second aspect, the present disclosure provides in some embodiments a computer program product including a computer program. The computer program is executed by a computer so that the computer implements the RIS precoding method in the third aspect.

In a twenty-third aspect, the present disclosure provides in some embodiments a chip system, including at least one processor and an interface, and used to support a network device to achieve functions involved in the first aspect, e.g., determine or process at least one of data or information involved in the above-mentioned RIS method. In a possible design, the chip system further includes a memory storing therein a computer program and data necessary for a terminal device. The chip system includes a chip, or includes a chip and other discrete elements.

In a twenty-fourth aspect, the present disclosure provides in some embodiments a chip system, including at least one processor and an interface, and used to support a RIS to achieve functions involved in the second aspect, e.g., determine or process at least one of data or information involved in the above-mentioned RIS method. In a possible design, the chip system further includes a memory storing therein a computer program and data necessary for a network device. The chip system include s a chip, or includes a chip and other discrete elements.

In a twenty-fifth aspect, the present disclosure provides in some embodiments a chip system, including at least one processor and an interface, and used to support a RIS to achieve functions involved in the third aspect, e.g., determine or process at least one of data or information involved in the above-mentioned RIS method. In a possible design, the chip system further includes a memory storing therein a computer program and data necessary for a network device. The chip system include s a chip, or includes a chip and other discrete elements.

In a twenty-sixth aspect, the present disclosure provides in some embodiments a computer program. The computer program is executed by a computer, so that the computer implements the RIS precoding method in the first aspect.

In a twenty-seventh aspect, the present disclosure provides in some embodiments a computer program. The computer program is executed by a computer, so that the computer implements the RIS precoding method in the second aspect.

In a twenty-eighth aspect, the present disclosure provides in some embodiments a computer program. The computer program is executed by a computer, so that the computer implements the RIS precoding method in the third aspect.

In a twenty-ninth aspect, the present disclosure provides in some embodiments a communication system, including a network device, a RIS and a terminal device. The network device is configured to implement the RIS precoding method in the first aspect, the RIS is configured to implement the RIS precoding method in the second aspect, and the terminal device is configured to implement the RIS precoding method in the third aspect.

### BRIEF DESCRIPTION OF THE DRAWINGS

In order to illustrate the technical solutions of the embodiments of the present disclosure or the background in a clearer manner, the drawings desired for the embodiments of the present disclosure or the background will be described hereinafter briefly;
FIG. 1 is a schematic view showing architecture of a communication system according to the embodiment of the present disclosure;
FIG. 2 is a flow chart of a RIS precoding method according to the embodiment of the present disclosure;
FIG. 3 is another flow chart of the RIS precoding method according to the embodiment of the present disclosure;
FIG. 4 is yet another flow chart of the RIS precoding method according to the embodiment of the present disclosure;
FIG. 5 is still yet another flow chart of the RIS precoding method according to the embodiment of the present disclosure;
FIG. 6 is still yet another flow chart of the RIS precoding method according to the embodiment of the present disclosure;
FIG. 7 is still yet another flow chart of the RIS precoding method according to the embodiment of the present disclosure;
FIG. 8 is still yet another flow chart of the RIS precoding method according to the embodiment of the present disclosure;
FIG. 9 is still yet another flow chart of the RIS precoding method according to the embodiment of the present disclosure;
FIG. 10 is still yet another flow chart of the RIS precoding method according to the embodiment of the present disclosure;
FIG. 11 is still yet another flow chart of the RIS precoding method according to the embodiment of the present disclosure;
FIG. 12 is still yet another flow chart of the RIS precoding method according to the embodiment of the present disclosure;
FIG. 13 is still yet another flow chart of the RIS precoding method according to the embodiment of the present disclosure;
FIG. 14 is still yet another flow chart of the RIS precoding method according to the embodiment of the present disclosure;
FIG. 15 is still yet another flow chart of the RIS precoding method according to the embodiment of the present disclosure;
FIG. 16 is still yet another flow chart of the RIS precoding method according to the embodiment of the present disclosure;
FIG. 17 is still yet another flow chart of the RIS precoding method according to the embodiment of the present disclosure;
FIG. 18 is a schematic view showing a communication apparatus according to the embodiment of the present disclosure;
FIG. 19 is another schematic view showing the communication apparatus according to the embodiment of the present disclosure; and
FIG. 20 is a schematic view showing a chip according to the embodiment of the present disclosure.

### DETAILED DESCRIPTION

For ease of understanding, terms involved in the embodiments of the present disclosure will be introduced at first.

### 1. PMI

The PMI indicates an adopted precoding matrix, and it is used for an operation of a closed-loop spatial multiplexing in a Multiple Input Multiple Output (MIMO) system. A precoding codebook has different sizes depending one quantities of antennae and streams. For example, in a case of four antennae, a size of the codebook is equal to 16, and correspondingly four bits are used to feed back the PMI. In a case of two antennae, sizes of the codebooks for streams 1/2 are 4 and 2 respectively, and correspondingly two bits or one bit are used to feed back the PMI.

### 2. RIS

The RIS is also called as Intelligent Reflection Surface (IRS). As viewed from outside, the RIS is an ordinary thin plate. However, it may be flexibly deployed in a wireless communication propagation environment to achieve operations of reflecting or refracting such features of an electromagnetic wave as frequency, phase and polarization, so as to reshape a wireless channel. To be specific, by a precoding technology, a signal reaching a surface of the RIS is reflected toward a specific direction, so as to enhance a signal intensity at a receiving end, and control the channel.

In order to understand a RIS precoding method in the embodiments of the present disclosure in a better manner, an available communication system will be described hereinafter at first.

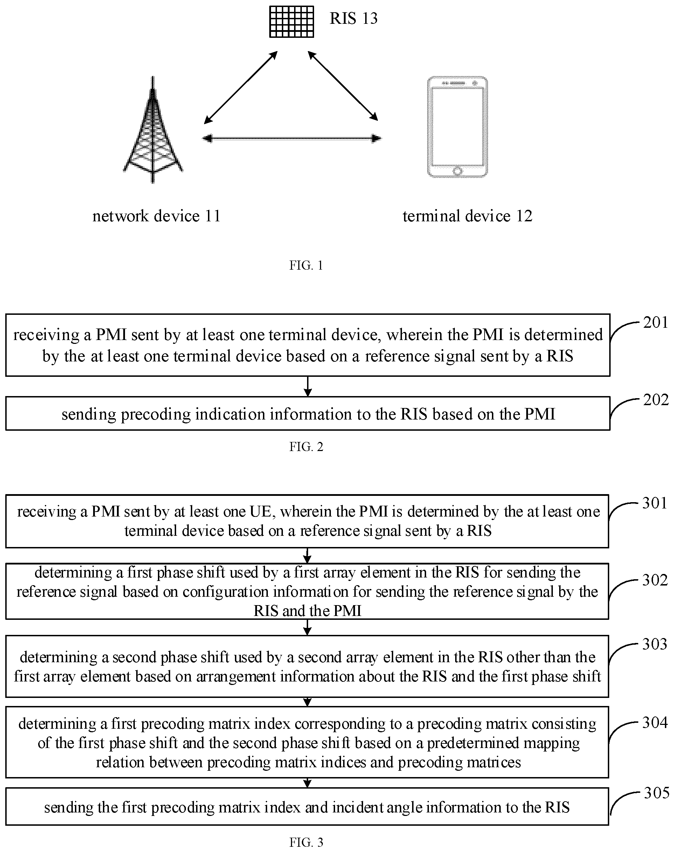

FIG. 1 is a schematic view showing architecture of a communication system according to one embodiment of the present disclosure. The communication system includes, but not limited to, one network device, one RIS and one terminal device. Quantities and forms of the devices in FIG. 1 are for illustrative purposes only, but shall not be construed as limiting the embodiments of the present disclosure. In actual use, the communication system may include two or more network devices, two or more RISs and two or more UEs. For example, as shown in FIG. 1, the communication system includes one network device 11, one terminal device 12 and one RIS 13.

It should be appreciated that, the technical solutions in the embodiments of the present disclosure may be applied to various communication systems, e.g., a Long Term Evolution (LTE) system, a 5^{th}-Generation (5G) mobile communication system, a 5G New Radio (NR) system, or any novel mobile communication system that may occur in the future.

In the embodiments of the present disclosure, the network device 11 is an entity at a network side for sending or receiving a signal. For example, the network device 11 is an evolved NodeB (eNB), a Transmission Reception Point (TRP), a next generation NodeB (gNB) in the NR system, a base station in the future mobile communication system, or an access point in a Wireless Fidelity (WiFi) system. A specific technology adopted by the network device and a specific device form thereof will not be particularly defined herein. The network device in the embodiments of the present disclosure may consist of a Central Unit (CU) and a Distributed Unit (DU), and the CU may also be called as control unit. Through the CU-DU structure, a protocol layer for the network device, e.g., a base station, is divided, i.e., a part of functions of the protocol layer are centrally controlled by the CU, a part of, or all of, the remaining functions of the protocol layer are distributed in the DU, and the DU is controlled by the CU.

In the embodiments of the present disclosure, the terminal device 12 is an entity at a user side for receiving or sending a signal, e.g., a mobile phone. The terminal device may also be called as terminal, user equipment (UE), Mobile Station (MS), Mobile Terminal (MT), etc. The terminal device may be a vehicle having a communication function, a smart vehicle, a mobile phone, a wearable device, a pad, a computer having a wireless transceiver function, a Virtual Reality (VR) terminal, an Augmented Reality (AR) terminal, a wireless terminal device in industrial control, a wireless terminal device in self-driving, a wireless terminal device in remote medical surgery, a wireless terminal device in smart grid, a wireless terminal device in transportation safety, a wireless terminal device in smart city, a wireless terminal device in smart home, etc. In the embodiments of the present disclosure, a specific technology adopted by the terminal device and a specific device form thereof will not be particularly defined.

In the embodiments of the present disclosure, the RIS 13 is an entity for the reflection or transmission of a signal in the wireless communication propagation environment.

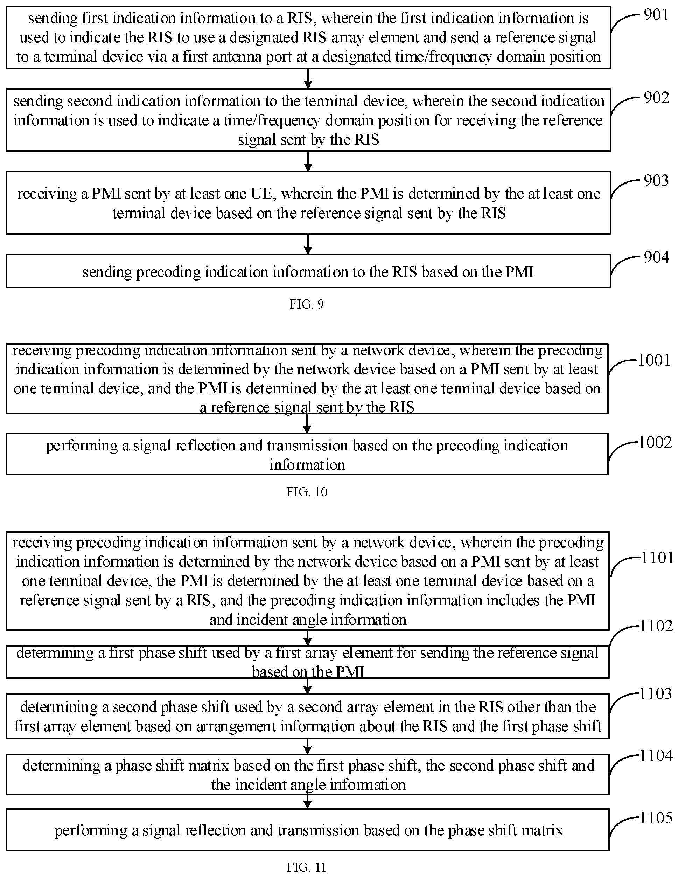

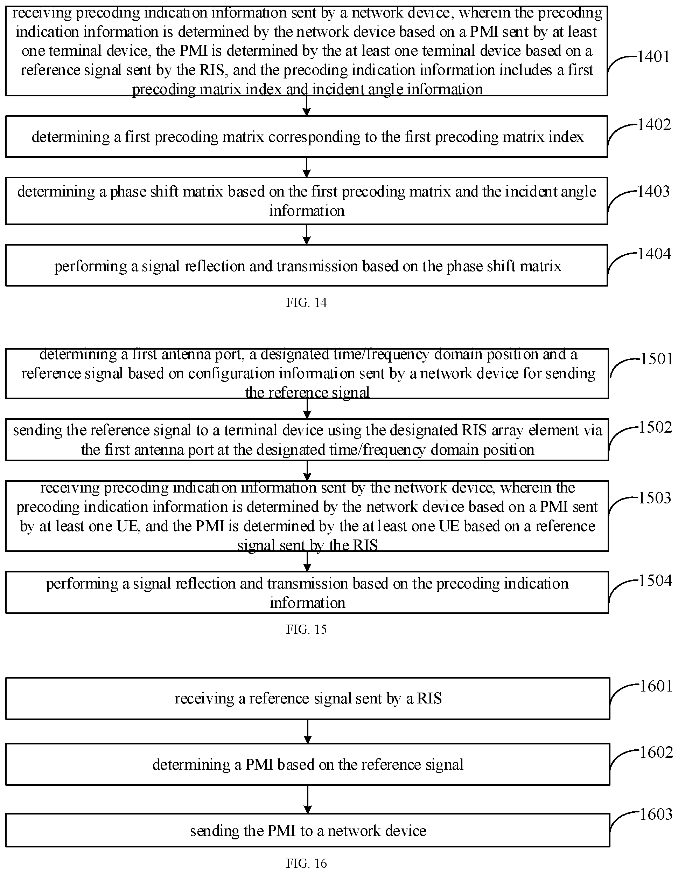

In the embodiments of the present disclosure, the network device 11 is used to achieve functions in any of FIGs. 2 to 9, the RIS 13 is used to achieve functions in any of FIGs. 10 to 14, and the terminal device 12 is used to achieve functions in any of FIGs. 15 to 17.

It should be appreciated that, the communication system described herein is used to describe the technical solutions provided in the embodiments of the present disclosure in a clearer manner, but shall not be construed as limiting the technical solutions. It is obvious for a person skilled in the art that, along with the evolution of the system architecture as well as the emergence of new service scenarios, the technical solutions are also applicable to similar technical problems.

Usually, the precoding of the RIS and the network device is designed jointly by an alternative optimization technology. However, during the joint design, channel information about the entire RIS is required, and the complexity is relatively high. In the embodiments of the present disclosure, the RIS precoding is performed based on channel information about a part of array elements in the RIS, so as to reduce the precoding complexity.

FIG. 2 is a flow chart of a RIS precoding method according to the embodiment of the present disclosure, and this method is executed by a network device. As shown in FIG. 2, the method includes, but not limited to, the following steps.

Step 201: a PMI sent by at least one terminal device is received, and the PMI is determined by the at least one terminal device based on a reference signal sent by a RIS.

In the embodiments of the present disclosure, considering that the RIS includes a part of active array elements for sending the reference signal for channel estimation, so the terminal device may receive and measure the reference signal sent by the active array elements of the RIS at a designated time/frequency domain position. Next, the terminal device determines the PMI corresponding to the reference signal based on the reference signal. Then, the terminal device sends the PMI to the network device, so that the network device controls a RIS channel based on the PMI, i.e., precodes the RIS based on information about the active array element of the RIS.

### Step 202: precoding indication information is sent to the RIS based on the PMI.

The precoding indication information includes any one of: the PMI and incident angle information; a first precoding matrix index and incident angle information; or a phase shift matrix index. The first precoding matrix index is an index of a precoding matrix generated based on the PMI, and a first precoding matrix is used to reflect information about an incident angle or a transmission angle corresponding to the entire RIS. The phase shift matrix index is an index of a new precoding matrix generated after updating the first precoding matrix in a case that the incident angle information about a signal sent by the network device to the RIS is taken into consideration, or an index of a phase shift matrix. The phase shift matrix is a phase shift matrix corresponding an entire RIS array.

Optionally, in a case that the network device has received a PMI corresponding to the RIS and sent by one terminal device, the network device sends the precoding indication information to the RIS based on the PMI. Alternatively, in a case that the network device has received multiple PMIs corresponding to the RIS and sent by multiple UEs, the network device sends the precoding indication information to the RIS based on multiple PMIs, which will not be particularly defined herein.

In a case that the precoding indication information is sent to the RIS based on multiple PMIs, the network device may fuse the multiple PMIs to determine a fused PMI, and then send the precoding indication information to the RIS based on the fused PMI. Optionally, the network device may calculate an average value of the multiple PMIs to obtain the fused PMI, or perform weighted averaging on the multiple PMIs to obtain the fused PMI.

In the embodiments of the present disclosure, the network device directly sends the PMI and the corresponding incident angle information to the RIS. The RIS determines the first precoding matrix corresponding to the entire array based on the PMI, determines the phase shift matrix corresponding to the entire RIS based on the incident angle information and the first precoding matrix, and then performs a signal reflection or transmission based on the phase shift matrix.

Alternatively, the network device also determines the first precoding matrix for the RIS based on the PMI, and sends the first precoding matrix index and the incident angle information to the RIS. The RIS determines the phase shift matrix corresponding to the entire RIS based on the first precoding matrix and the incident angle information, and performs the signal reflection or transmission based on the phase shift matrix. The incident angle information includes an incident angle for sending, by the network device, a signal to the RIS.

Alternatively, the network device also determines the first precoding matrix corresponding to the RIS, determines the phase shift matrix for the RIS based on the first precoding matrix and the incident angle information, and then directly sends the phase shift matrix index to the RIS. The RIS performs the signal reflection or transmission based on the phase shift matrix.

In the embodiments of the present disclosure, the network device receives the PMI sent by the at least one terminal device, and the PMI is determined by the at least one terminal device based on the reference signal sent by the RIS. Then, the network device sends the precoding indication information to the RIS based on the PMI. In this way, the network device controls the RIS precoding based on the PMI corresponding to a part of channels for the RIS, so as to reduce a RIS precoding complexity while ensuring that the RIS is precoded accurately.

FIG. 3 is a flow chart of a RIS precoding method according to the embodiment of the present disclosure, and this method is executed by a network device. As shown in FIG. 3, the RIS precoding method includes, but not limited to, the following steps.

Step 301: a PMI sent by at least one terminal device is received, and the PMI is determined by the at least one terminal device based on a reference signal sent by a RIS.

In the embodiments of the present disclosure, a specific implementation procedure of Step 301 may refer to the detailed description in any embodiment of the present disclosure, and thus will not be particularly defined herein.

Step 302: a first phase shift used by a first array element in the RIS for sending the reference signal is determined based on configuration information for sending the reference signal by the RIS and the PMI.

The first array element is an active array element in the RIS for sending the reference signal, and the configuration information includes an antenna port for sending the reference signal and a time/frequency domain resource position for sending the reference signal, which will not be particularly defined herein.

In the embodiments of the present disclosure, the network device may configure a configuration for the RIS for sending the reference signal, so as to indicate the RIS to send the reference signal to the terminal device using a designated RIS array element (e.g., the first array element) via a corresponding antenna port at a designated time/frequency domain position. In addition, there is correspondence between antenna ports of the RIS for sending the reference signal and active array elements.

Optionally, in a case that the network device has received the PMI sent by one terminal device, the network device determines an antenna port corresponding to the PMI and the first array element based on the configuration information, and then determines the first phase shift used by the first array element based on the PMI.

Optionally, in a case that the network device has received multiple PMIs sent by multiple UEs, the network device may fuse the multiple PMIs to determine a fused PMI, determines the antenna port and the first array element corresponding to the fused PMI, and then determines the first phase shift used by the first array element based on the fused PMI.

It should be appreciated that, the PMIs sent by the multiple UEs are measured and determined based on the reference signal sent by the RIS via a same active array element, so the multiple PMIs corresponds to a same antenna port.

A specific procedure of fusing the multiple PMIs may refer to the detailed description in any embodiment of the present disclosure, and thus will not be particularly defined herein.

Step 303: a second phase shift used by a second array element in the RIS other than the first array element is determined based on arrangement information about the RIS and the first phase shift.

The second array element is an array element in the RIS other than the first array element for sending the reference signal. Optionally, the second array element may include, or not include, an active array element. The arrangement information about the RIS is used to represent positions of the first array element and the second array element in the RIS. For example, the arrangement information includes a row number and/or a column number of each array element, or a distance and an angle of each array element relative to a reference array element (or a positioning array element), which will not be particularly defined herein.

In the embodiments of the present disclosure, the network device determines the second phase shift used by the second array element among multiple first array elements by linear interpolation based on the first phase shifts used by the multiple first array elements. For example, the second phase shift used by each second array element between two adjacent first array elements is determined based on the quantity of second array elements between the two adjacent first array elements as well as the first phase shift used by each of the two adjacent first array elements.

For example, it is presumed that the two adjacent first array elements includes an array element 1 and an array element 2, a phase shift of the array element 1 is 0°, a phase shift of the array element 2 is 30°, and there are two second array elements, i.e., an array element 3 and an array element 4, between the array element 1 and the array element 2. By interpolation, it may be determined that a phase shift of the array element 3 is 10°, and a phase shift of the array element 4 is 20°.

Alternatively, the network device also determines the second phase shift used by the second array element by non-linear interpolation based on the arrangement information about the RIS and the first phase shift used by the first array element; or the network device also determines the second phase shift used by the second array element by a network model generated by training based on the arrangement information about the RIS and the first phase shift used by the first array element, which will not be particularly defined herein.

Step 304: a first precoding matrix index corresponding to a precoding matrix consisting of the first phase shift and the second phase shift is determined based on a predetermined mapping relation between precoding matrix indices and precoding matrices.

In the embodiments of the present disclosure, the network device combines the first phase shift and the second phase shift based on positions of the corresponding array elements in the RIS to determine a first precoding matrix for the entire RIS array, and determines the first precoding matrix index associated with the first precoding matrix based on the mapping relation between the predetermined precoding matrix indices and the precoding matrices.

Step 305: the first precoding matrix index and incident angle information are sent to the RIS.

In the embodiments of the present disclosure, in a case of forwarding, the RIS further needs to consider an incident angle for sending a signal or data to the RIS by the network device, so the network device sends the first precoding matrix index and the incident angle information to the RIS. Then, the RIS determines the first precoding matrix associated with the first precoding matrix index based on the predetermined mapping relation between the precoding matrices and the precoding matrix indices, determines a phase shift matrix corresponding to the entire RIS based on the first precoding matrix and the incident angle information, and performs a signal reflection or transmission based on a phase shift corresponding to each array element in the finally-determined phase shift matrix.

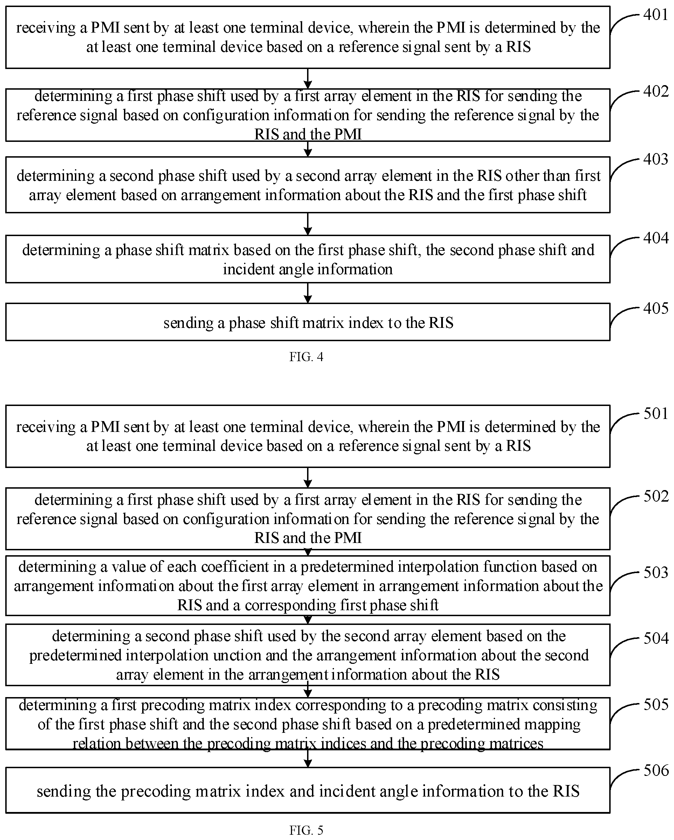

In the embodiments of the present disclosure, the network device receives the PMI sent by the at least one terminal device, and the PMI is determined by the at least one terminal device based on the reference signal sent by the RIS. Next, the network device determines the first phase shift used by the first array element in the RIS for sending the reference signal based on the configuration information for sending the reference signal by the RIS and the PMI, and determines the second phase shift used by the second array element in the RIS other than the first array element based on the arrangement information about the RIS and the first phase shift. Then, the network device determines the first precoding matrix index corresponding to the precoding matrix consisting of the first phase shift and the second phase shift based on the predetermined mapping relation between the precoding matrix indices and the precoding matrices, and sends the first precoding matrix index and the incident angle information to the RIS. In this way, the network device controls the RIS precoding based on the PMI corresponding to a part of channels for the RIS, so as to reduce a RIS precoding complexity while ensuring that the RIS is precoded accurately. FIG. 4 is a flow chart of a RIS precoding method according to the embodiment of the present disclosure, and this method is executed by a network device. As shown in FIG. 4, the RIS precoding method includes, but not limited to, the following steps.

Step 401: a PMI sent by at least one terminal device is received, and the PMI is determined by the at least one terminal device based on a reference signal sent by a RIS.

Step 402: a first phase shift used by a first array element in the RIS for sending the reference signal is determined based on configuration information for sending the reference signal by the RIS and the PMI.

Step 403: a second phase shift used by a second array element in the RIS other than first array element is determined based on arrangement information about the RIS and the first phase shift.

In the embodiments of the present disclosure, a specific implementation procedure of Steps 401 to 403 may refer to the detailed description in any embodiment of the present disclosure, and thus will not be particularly defined herein.

Step 404: a phase shift matrix is determined based on the first phase shift, the second phase shift and incident angle information.

In the embodiments of the present disclosure, the network device combines the first phase shift and the second phase shift based on the arrangement information about the RIS to determine a first precoding matrix, and modify the first precoding matrix based on incident angle information to generate the phase shift matrix used in a case that the reflection or transmission is performed by the RIS.

Step 405: a phase shift matrix index is sent to the RIS.

In the embodiments of the present disclosure, the network device determines the phase shift matrix index corresponding to the phase shift matrix based on the predetermined mapping relation between the phase shift matrices and the phase shift matrix indices, and then sends the phase shift matrix index to the RIS. The RIS determines the phase shift matrix corresponding to the entire RIS based on the phase shift matrix index as well as the predetermined mapping relationship between the phase shift matrices and the phase shift matrix indices, and performs the signal reflection or transmission based on the phase shift corresponding to each array element in the finally-determined phase shift matrix.

In the embodiments of the present disclosure, the network device receives the PMI sent by the at least one terminal device, and the PMI is determined by the at least one terminal device based on the reference signal sent by the RIS. The network device determines the first phase shift used by the first array element in the RIS for sending the reference signal based on the configuration information for sending the reference signal by the RIS and the PMI, and determines the second phase shift used by the second array element in the RIS other than the first array element based on the arrangement information about the RIS and the first phase shift. Then, the network device determines the phase shift matrix based on the first phase shift, the second phase shift and the incident angle information, and sends the phase shift matrix index to the RIS. In this way, the network device controls the RIS precoding based on the PMI corresponding to a part of channels for the RIS, so as to reduce a RIS precoding complexity while ensuring that the RIS is precoded accurately.

FIG. 5 is a flow chart of a RIS precoding method according to the embodiment of the present disclosure, and this method is executed by a network device. As shown in FIG. 5, the RIS precoding method includes, but not limited to, the following steps.

Step 501: a PMI sent by at least one terminal device is received, and the PMI is determined by the at least one terminal device based on a reference signal sent by a RIS.

Step 502: a first phase shift used by a first array element in the RIS for sending the reference signal is determined based on configuration information for sending the reference signal by the RIS and the PMI.

In the embodiments of the present disclosure, a specific implementation procedure of Steps 501 to 502 may refer to the detailed description in any embodiment of the present disclosure, and thus will not be particularly defined herein.

Step 503: a value of each coefficient in a predetermined interpolation function is determined based on arrangement information about the first array element in arrangement information about the RIS and a corresponding first phase shift.

The arrangement information about the RIS includes the arrangement information about the first array element and arrangement information about a second array element. The arrangement information includes a row number and a column number of each array element, or includes a distance and an angle of each array element relative to a reference array element (or positioning array element).

In the embodiments of the present disclosure, various interpolation functions are stored in the network device, and in a case that the RIS needs to be precoded based on the PMI corresponding to a part of RIS array elements, one predetermined interpolation function is selected based on a practical need, so as to calculate a second phase shift used by the second array element.

Different RISs have different reflection angles, so the applicable interpolation functions may be different. In the embodiments of the present disclosure, the value of each coefficient in the predetermined interpolation function may be determined at first based on the arrangement information about the first array element using the known first phase shift.

Optionally, the network device selects the first phase shift corresponding to several first array elements based on the quantity of coefficients included in the to-be-calculated interpolation function, so as to calculate the value of each coefficient in the interpolation function.

Alternatively, the network device also determines at first the first array element associated with each second array element, and then calculates the value of each coefficient in the predetermined interpolation function corresponding to the second array element based on the determined first array element. In other words, for different second array elements, the values of each coefficient in the predetermined interpolation function obtained by calculation may be different. The predetermined interpolation function maybe a linear or non-linear function.

In addition, the first array element associated with the second array element may be a first array element in the RIS which is spaced apart from the second array element by a distance smaller than a predetermined threshold, or a first array element determined based on a predetermined rule, e.g., a first array element within a designated range in a designated direc tion of the second array element, or a designated quantity of first array elements ranked in an ascending order of distances, which will not be particularly defined herein.

Optionally, the network device determines the value of each coefficient in the predetermined interpolation function based on the arrangement information about two first array elements and the corresponding first phase shift.

For example, it is presumed that the predetermined interpolation function is θ=kx+by, where θ is a phase shift value corresponding to an array element, x is a row number corresponding to the array element, and y is a column number corresponding to the array element. The arrangement information about two first array elements indicates an array element in a first row and a first column and an array element in the first row and a fourth column, a first phase shift corresponding to the array element in the first row and the first column is 0°, and a first phase shift corresponding to the array element in the first row and the fourth column is 40°. The arrangement information corresponding to the two first array elements and the first phase shifts are substituted into the interpolation function, i.e., coordinates (1,1,0) and (1,4,40) are substituted into the interpolation function, and it may be determined that the parameter k is 0 and the parameter b is 10 in the interpolation function.

Optionally, the network device also determines the value of each coefficient in the predetermined interpolation function based on the arrangement information about more than two first array elements and the corresponding first phase shift.

For example, in a case that the predetermined interpolation function has the above-mentioned form, the network device may divide more than two first array elements into groups so as to generate multiple first array element groups each including two first array elements, and then determine the value of each coefficient in the predetermined interpolation function based on the first phase shift corresponding to each first array element group and the arrangement information. Hence, multiple values may be determined for each coefficient in the interpolation function. Then, the network device may determine an average value of these values corresponding to each parameter as a final value of each coefficient in the predetermined interpolation function.

Alternatively, in a case that the form of the predetermined interpolation function is not that mentioned hereinabove, e.g., it includes more parameters, the network device may divide multiple first array elements into groups based on the quantity of to-be-solved parameters. For example, in a case that the predetermined interpolation function includes three to-be-solved parameters, the multiple first array elements is divided into groups each including three first array elements, then a group of coefficient values are calculated based on each group of first array elements, and then a final value of the coefficient is determined based on multiple groups of coefficient values.

It should be appreciated that, the examples of the interpolation function are for illustrative purposes only, but shall not be construed as limiting the RIS precoding method provided in the embodiments of the present disclosure. Optionally, in a case that the interpolation function is a nonlinear function, the fist array element group associated with each second array element may also be determined based on the quantity of parameters included in the interpolation function as well as the arrangement information about the first array element, and then the value of each parameter included in the interpolation function may be determined based on the arrangement information about the first array element in the arrangement information about the RIS and the corresponding first phase shift.

The quantity of first array elements in the first array element group is greater than or equal to the quantity of parameters in the interpolation function, so as to ensure that the network device accurately determines the value of each parameter in the interpolation function based on the first phase shift corresponding to the first array element group. In a case that the quantity of first array elements in the first array element group is equal to the quantity of parameters in the interpolation function, the arrangement information about each first array element in the first array element group and the corresponding first phase shift are directly substituted into the interpolation function, so as to determine the value of the coefficient in the interpolation function. In a case that the quantity of first array elements in the first array element group is greater than the quantity of parameters in the interpolation function, the first array elements in the first array element group are directly divided into multiple first array element sub-groups, and each first array element sub-group includes the first array elements, the quantity of which is equal to the quantity of parameters. The value of each coefficient in the predetermined interpolation function is determined based on each first array element sub-group and the corresponding first phase shift, so as to determine multiple values of each coefficient in the interpolation function. Then, an average value of the multiple values of each coefficient is determined as a final value of the coefficient in the predetermined interpolation function.

Alternatively, the first array elements may also be selected based on a predetermined rule, e.g., a predetermined quantity of first array elements surrounding each second array element may be selected, and then the value of each coefficient in the nonlinear function may be calculated based on the first phase shifts corresponding to the selected first array elements.

Optionally, the network device may also send the predetermined interpolation function to the RIS, and upon the receipt of the PMI sent by the terminal device, directly send the PMI to the RIS, so that the RIS calculates, by interpolation, the phase shift used by the second array element based on the predetermined interpolation function and the phase shift used by the first array element.

Step 504: a second phase shift used by the second array element is determined based on the predetermined interpolation function and the arrangement information about the second array element in the arrangement information about the RIS.

In the embodiments of the present disclosure, after determining the value of each parameter in the predetermined interpolation function, the parameters are substituted into the interpolation function, and then the arrangement information about the second array element is substituted into the interpolation function, so as to determine the second phase shift used by each second array element.

It should be appreciated that, the first array element groups associated with the second array elements are different, so the interpolation functions corresponding to the second array elements may be different too. The interpolation function corresponding to each second array element may be determined based on the first array element group associated with the second array element and the corresponding first phase shift, and then the arrangement information about each second array element may be substituted into the interpolation function corresponding to the second array element, so as to determine the second phase shift used by the second array element in the RIS.

Step 505: a first precoding matrix index corresponding to a precoding matrix consisting of the first phase shift and the second phase shift is determined based on a predetermined mapping relation between the precoding matrix indices and the precoding matrices.

Step 506: the precoding matrix index and incident angle information are sent to the RIS.

In the embodiments of the present disclosure, a specific implementation procedure of Steps 505 and 506 may refer to the detailed description in any embodiment of the present disclosure, and thus will not be particularly defined herein.

In the embodiments of the present disclosure, the network device receives the PMI sent by the at least one terminal device, and the PMI is determined by the at least one terminal device based on the reference signal sent by the RIS. The network device determines the first phase shift used by the first array element in the RIS for sending the reference signal based on the configuration information for sending the reference signal by the RIS and the PMI. Next, the network device determines the value of each coefficient in the predetermined interpolation function based on the arrangement information about the first array element in the arrangement information about the RIS and the corresponding first phase shift, and determines the second phase shift used by the second array element based on the predetermined interpolation function and the arrangement information about the second array element in the arrangement information about the RIS. Then, the network device determines the first precoding matrix index corresponding to the precoding matrix consisting of the first phase shift and the second phase shift based on the predetermined mapping relation between the precoding matrix indices and the precoding matrices, and sends the first precoding matrix index and the incident angle information to the RIS. In this way, the network device controls the RIS precoding based on the PMI corresponding to a part of channels for the RIS, so as to reduce a RIS precoding complexity while ensuring that the RIS is precoded accurately.

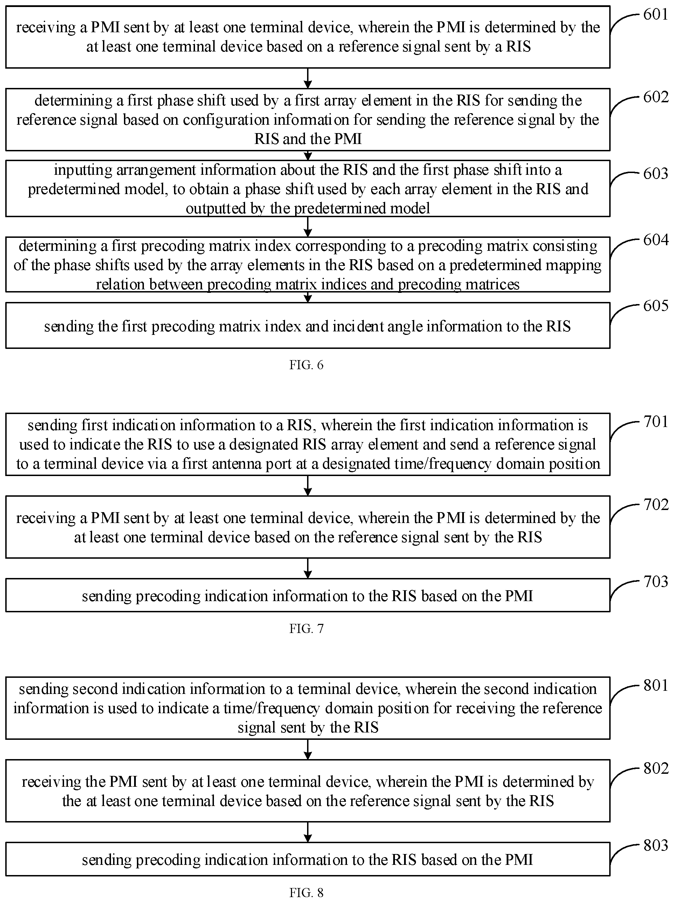

FIG. 6 is a flow chart of a RIS precoding method according to the embodiment of the present disclosure, and this method is executed by a network device. As shown in FIG. 6, the RIS precoding method includes, but not limited to, the following steps.

Step 601: a PMI sent by at least one terminal device is received, and the PMI is determined by the at least one terminal device based on a reference signal sent by a RIS.

Step 602: a first phase shift used by a first array element in the RIS for sending the reference signal is determined based on configuration information for sending the reference signal by the RIS and the PMI.

In the embodiments of the present disclosure, a specific implementation procedure of Steps 601 and 602 may refer to the detailed description in any embodiment of the present disclosure, and thus will not be particularly defined herein.

Step 603: arrangement information about the RIS and the first phase shift are inputted into a predetermined model, to obtain a phase shift used by each array element in the RIS and outputted by the predetermined model.

The predetermined model is used to determine the phase shift used by each array element in the RIS based on phase shift information about a part of array elements and the arrangement information about the RIS. The predetermined model may be an Artificial Intelligence (AI) network model or the like, which will not be particularly defined herein.

In the embodiments of the present disclosure, the arrangement information about the RIS and the first phase shift are inputted into the predetermined model, and the predetermined model outputs the phase shift used by each array element in the RIS.

Optionally, the network device further sends the predetermined model to the RIS, so that the network device directly sends the PMI to the RIS upon the receipt of the PMI sent by the at least one terminal device. The RIS calculates the phase shift used by each array element in the RIS based on the predetermined model and the phase shift used by the first array element.

Step 604: a first precoding matrix index corresponding to a precoding matrix consisting of the phase shifts used by the array elements in the RIS is determined based on a predetermined mapping relation between precoding matrix indices and precoding matrices.

Step 605: the first precoding matrix index and incident angle information are sent to the RIS.

In the embodiments of the present disclosure, a specific implementation procedure of Steps 604 and 605 may refer to the detailed description in any embodiment of the present disclosure, and thus will not be particularly defined herein.

In the embodiments of the present disclosure, the network device receives the PMI sent by the at least one terminal device, and the PMI is determined by the at least one terminal device based on the reference signal sent by the RIS. The network device determines the first phase shift used by the first array element in the RIS for sending the reference signal based on the configuration information for sending the reference signal by the RIS and the PMI, and inputs the arrangement information about the RIS and the first phase shift into the predetermined model to obtain the phase shift used by each array element in the RIS and outputted by the predetermined model. Then, the network device determines the first precoding matrix index corresponding to the precoding matrix consisting of the phase shifts used by the array elements in the RIS based on the predetermined mapping relation between the precoding matrix indices and the precoding matrices, and sends the first precoding matrix index and the incident angle information to the RIS. In this way, the network device controls the RIS precoding based on the PMI corresponding to a part of channels for the RIS, so as to reduce a RIS precoding complexity while ensuring that the RIS is precoded accurately.

FIG. 7 is a flow chart of a RIS precoding method according to the embodiment of the present disclosure, and this method is executed by a network device. As shown in FIG. 7, the RIS precoding method includes, but not limited to, the following steps.

Step 701: first indication information is sent to a RIS, and the first indication information is used to indicate the RIS to use a designated RIS array element and send a reference signal to a terminal device via a first antenna port at a designated time/frequency domain position.

The first antenna port is an antenna port corresponding to the designated array element (a first array element).

In the embodiments of the present disclosure, considering that the RIS includes a part of active array elements for sending the reference signal for channel estimation, so the network device sends the first indication information to the RIS to indicate the RIS to use the designated RIS array element (the first array element) and send the reference signal to the terminal device via the first antenna port at the designated time/frequency domain position.

Step 702: a PMI sent by at least one terminal device is received, and the PMI is determined by the at least one terminal device based on the reference signal sent by the RIS.

Step 703: precoding indication information is sent to the RIS based on the PMI.

In the embodiments of the present disclosure, a specific implementation procedure of Steps 702 and 703 may refer to the detailed description in any embodiment of the present disclosure, and thus will not be particularly defined herein.

In the embodiments of the present disclosure, the network device sends the first indication information to the RIS, and the first indication information is used to indicate the RIS to use the designated RIS array element and send the reference signal to the terminal device via the first antenna port at the designated time/frequency domain position. Next, the network device receives the PMI sent by the at least one terminal device, and the PMI is determined by the at least one terminal device based on the reference signal sent by the RIS. Then, the network device sends the precoding indication information to the RIS based on the PMI. In this way, the network device controls the RIS precoding based on the PMI corresponding to a part of channels for the RIS, so as to reduce a RIS precoding complexity while ensuring that the RIS is precoded accurately.

FIG. 8 is a flow chart of a RIS precoding method according to the embodiment of the present disclosure, and this method is executed by a network device. As shown in FIG. 8, the RIS precoding method includes, but not limited to, the following steps.

Step 801: second indication information is sent to a terminal device, and the second indication information is used to indicate a time/frequency domain position for receiving the reference signal sent by the RIS.

In the embodiments of the present disclosure, the network device sends the second indication information to the terminal device, so as to indicate the time/frequency domain position for receiving the reference signal sent by the RIS. In this way, the terminal device receives the reference signal at the time/frequency domain position, and measures the reference signal at the time/frequency domain position, so as to determine a PMI corresponding to the reference signal.

Step 802: the PMI sent by at least one terminal device is received, and the PMI is determined by the at least one terminal device based on the reference signal sent by the RIS.

Step 803: precoding indication information is sent to the RIS based on the PMI.

In the embodiments of the present disclosure, a specific implementation procedure of Steps 802 and 803 may refer to the detailed description in any embodiment of the present disclosure, and thus will not be particularly defined herein.

In the embodiments of the present disclosure, the network device sends the second indication information to the terminal device, and the second indication information is used to indicate the time/frequency domain position for receiving the reference signal sent by the RIS. Next, the network device receives the PMI sent by the at least one terminal device, and the PMI is determined by the at least one terminal device based on the reference signal sent by the RIS. Then, the network device sends the precoding indication information to the RIS based on the PMI. In this way, the network device controls the RIS precoding based on the PMI corresponding to a part of channels for the RIS, so as to reduce a RIS precoding complexity while ensuring that the RIS is precoded accurately.

FIG. 9 is a flow chart of a RIS precoding method according to the embodiment of the present disclosure, and this method is executed by a network device. As shown in FIG. 9, the RIS precoding method includes, but not limited to, the following steps.

Step 901: first indication information is sent to a RIS, and the first indication information is used to indicate the RIS to use a designated RIS array element and send a reference signal to a terminal device via a first antenna port at a designated time/frequency domain position.

Step 902: second indication information is sent to the terminal device, and the second indication information is used to indicate a time/frequency domain position for receiving the reference signal sent by the RIS.

Step 903: a PMI sent by at least one terminal device is received, and the PMI is determined by the at least one terminal device based on the reference signal sent by the RIS.

Step 904: precoding indication information is sent to the RIS based on the PMI.

In the embodiments of the present disclosure, a specific implementation procedure of Steps 901 to 904 may refer to the detailed description in any embodiment of the present disclosure, and thus will not be particularly defined herein.

In the embodiments of the present disclosure, the network device sends the first indication information to the RIS, and the first indication information is used to indicate the RIS to use the designated RIS array element and send the reference signal to the terminal device via the first antenna port at the designated time/frequency domain position. Next, the network device sends the second indication information to the terminal device, and the second indication information is sued to indicate the time/frequency domain position for receiving the reference signal sent by the RIS. Next, the network device receives the PMI sent by the at least one terminal device, and the PMI is determined by the at least one terminal device based on the reference signal sent by the RIS. Then, the network device sends the precoding indication information to the RIS based on the PMI. In this way, the network device controls the RIS precoding based on the PMI corresponding to a part of channels for the RIS, so as to reduce a RIS precoding complexity while ensuring that the RIS is precoded accurately.

FIG. 10 is a flow chart of a RIS precoding method according to the embodiment of the present disclosure, and this method is executed by a RIS. As shown in FIG. 10, the RIS precoding method includes, but not limited to, the following steps.

Step 1001: precoding indication information sent by a network device is received. The precoding indication information is determined by the network device based on a PMI sent by at least one terminal device, and the PMI is determined by the at least one terminal device based on a reference signal sent by the RIS.

In the embodiments of the present disclosure, considering that the RIS includes a part of active array elements for sending the reference signal for channel estimation, so the terminal device may receive and measure the reference signal sent by the active array elements of the RIS at a designated time/frequency domain position. Next, the terminal device determines the PMI corresponding to the reference signal based on the reference signal. Then, the terminal device sends the PMI to the network device, so that the network device sends the precoding indication information to the RIS based on the PMI, and controls a RIS channel, i.e., precodes the RIS based on information about the active array elements of the RIS.

The precoding indication information includes any one of: the PMI and incident angle information; a first precoding matrix index and incident angle information; or a phase shift matrix index. The first precoding matrix index is an index of a precoding matrix generated based on the PMI, and a first precoding matrix is used to reflect information about an incident angle or a transmission angle corresponding to the entire RIS. The phase shift matrix index is an index of a new precoding matrix generated after updating the first precoding matrix in a case that the incident angle information about a signal sent by the network device to the RIS is taken into consideration, or an index of a phase shift matrix. The phase shift matrix is a phase shift matrix corresponding an entire RIS array.

Optionally, in a case that the network device has received a PMI corresponding to the RIS and sent by one terminal device, the network device sends the precoding indication information to the RIS based on the PMI. Alternatively, in a case that the network device has received PMIs corresponding to the RIS and sent by multiple UEs, the network device sends the precoding indication information to the RIS based on the PMIs, which will not be particularly defined herein.

In a case that the precoding indication information is sent to the RIS based on the multiple PMIs, the network device may fuse the multiple PMIs to determine a fused PMI, and then send the precoding indication information to the RIS based on the fused PMI. Optionally, the network device may calculate an average value of the multiple PMIs to obtain the obtained PMI, or perform weighted averaging on the multiple PMIs to obtain the fused PMI.

In the embodiments of the present disclosure, the precoding indication information sent by the network device and received by the RIS includes the PMI and the corresponding incident angle information.

Alternatively, the network device also determines the first precoding matrix for the RIS based on the PMI, and sends the first precoding matrix index and the incident angle information to the RIS. Hence, the precoding indication information sent by the network device and received by the RIS includes the first precoding matrix index and the incident angle information.

Alternatively, the network device also determines the first precoding matrix corresponding to the RIS, determines the phase shift matrix for the RIS based on the first precoding matrix and the incident angle information, and then directly sends the phase shift matrix index to the RIS. Hence, the precoding indication information sent by the network device and received by the RIS includes the phase shift matrix index.

Step 1002: a signal reflection and transmission is performed based on the precoding indication information.

In the embodiments of the present disclosure, in a case that the indication information includes the PMI and the corresponding incident angle information, the RIS determines the first precoding matrix corresponding to the entire array, determines the phase shift matrix corresponding to the entire RIS based on the incident angle information and the first precoding matrix, and then performs the signal reflection or transmission based on the phase shift corresponding to each array element in the finally-determined phase shift matrix. The incident angle information includes an incident angle of a signal sent by the network device to the RIS.

Alternatively, in a case that the indication information includes the first precoding matrix index and the incident angle information, the RIS determines the first precoding matrix corresponding to the entire RIS based on the first precoding matrix index, determines the phase shift matrix corresponding to the entire RIS based on the first precoding matrix and the incident angle information, and performs the signal reflection or transmission based on the phase shift corresponding to each array element in the finally-determined phase shift matrix.

Alternatively, in a case that the indication information includes the phase shift matrix index, the RIS determines the phase shift matrix corresponding to the entire RIS based on the phase shift matrix index, and then performs the signal reflection or transmission based on the phase shift corresponding to each array element in the finally -determined phase shift matrix.

In the embodiments of the present disclosure, the RIS receives the precoding indication information sent by the network device, and the precoding indication information is determined based on the PMI sent by the at least one terminal device. Then, the RIS performs the signal reflection and transmission based on the precoding indication information. In this way, the network device controls the RIS precoding based on the PMI corresponding to a part of channels for the RIS, so as to reduce a RIS precoding complexity while ensuring that the RIS is precoded accurately.

FIG. 11 is a flow chart of a RIS precoding method according to the embodiment of the present disclosure, and this method is executed by the RIS. As shown in FIG. 11, the RIS precoding method includes, but not limited to, the following steps.

Step 1101: precoding indication information sent by a network device is received. The precoding indication information is determined by the network device based on a PMI sent by at least one terminal device, and the PMI is determined by the at least one terminal device based on a reference signal sent by the RIS. The precoding indication information includes the PMI and incident angle information.

In the embodiments of the present disclosure, a specific implementation procedure of Step 1101 may refer to the detailed description in any embodiment of the present disclosure, and thus will not be particularly defined herein.

Step 1102: a first phase shift used by a first array element for sending the reference signal is determined based on the PMI.

The first array element is an active array element in the RIS for sending the reference signal, which will not be particularly defined herein.

In the embodiments of the present disclosure, the RIS sends the reference signal to the terminal device using a designated RIS array element (e.g., the first array element) via a corresponding antenna port at a designated time/frequency domain position based on configuration information configured by the network device for sending the reference signal. In addition, there is a correspondence between antenna ports for sending the reference signal and active array elements. Hence, in a case that the precoding indication information includes the PMI and the incident angle information, the RIS determines the antenna port and the first array element corresponding to the PMI based on the configuration information, and then determines the first phase shift used by the first array element based on the PMI.

The configuration information includes an antenna port for sending the reference signal and a time/frequency domain resource position or sending the reference signal.

Step 1103: a second phase shift used by a second array element in the RIS other than the first array element is determined based on arrangement information about the RIS and the first phase shift.

The second array element is an array element in the RIS other than the first array element for sending the reference signal. Optionally, the second array element may include, or not include, an active array element. The arrangement information about the RIS is used to represent positions of the first array element and the second array element in the RIS. For example, the arrangement information includes a row number and/or a column number of each array element, or a distance and an angle of each array element relative to a reference array element (or a positioning array element), which will not be particularly defined herein.

In the embodiments of the present disclosure, the RIS determines the second phase shift used by the second array element among multiple first array elements by linear interpolation based on the first phase shifts used by the multiple first array elements. For example, the second phase shift used by each second array element between two adjacent first array elements is determined based on the quantity of second array elements between the two adjacent first array elements as well as the first phase shift used by each of the two adjacent first array elements.

For example, it is presumed that the two adjacent first array elements includes an array element 1 and an array element 2, a phase shift of the array element 1 is 0°, a phase shift of the array element 2 is 30°, and there are two second array elements, i.e., an array element 3 and an array element 4, between the array element 1 and the array element 2. By interpolation, it may be determined that a phase shift of the array element 3 is 10°, and a phase shift of the array element 4 is 20°.

Alternatively, the RIS also determines the second phase shift used by the second array element by non-linear interpolation based on the arrangement information about the RIS and the first phase shift used by the first array element; or the RIS also determines the second phase shift used by the second array element by a network model generated by training based on the arrangement information about the RIS and the first phase shift used by the first array element, which will not be particularly defined herein.

Step 1104: a phase shift matrix is determined based on the first phase shift, the second phase shift and the incident angle information.

In the embodiments of the present disclosure, the RIS combines the first phase shift and the second phase shift based on the arrangement information about the RIS to determine a precoding matrix for the entire RIS array. In a case of forwarding, the RIS further needs to consider an incident angle for sending a signal or data to the RIS by the network device, so the precoding matrix is further updated based on the incident angle information about the signal sent by the network device to the RIS, so as to generate the actually available phase shift matrix for the RIS.

Step 1105: a signal reflection and transmission is performed based on the phase shift matrix.

In the embodiments of the present disclosure, the detailed explanation about Step 1105 may refer to the detailed description in any embodiment of the present disclosure, and thus will not be particularly defined herein.

In the embodiments of the present disclosure, the RIS receives the precoding indication information sent by the network device, and the precoding indication information is determined based on the PMI sent by the at least one terminal device. In a case that the precoding indication information includes the PMI and the incident angle information, the RIS determines the first phase shift used by the first array element for sending the reference signal based on the PMI, and determines the second phase shift used by the second array element in the RIS other than the first array element based on the arrangement information about the RIS and the first phase shift. Then, the RIS determines the phase shift matrix based on the first phase shift, the second phase shift and the incident angle information, and performs the signal reflection and transmission based on the phase shift matrix. In this way, the network device controls the RIS precoding based on the PMI corresponding to a part of channels for the RIS, so as to reduce a RIS precoding complexity while ensuring that the RIS is precoded accurately.

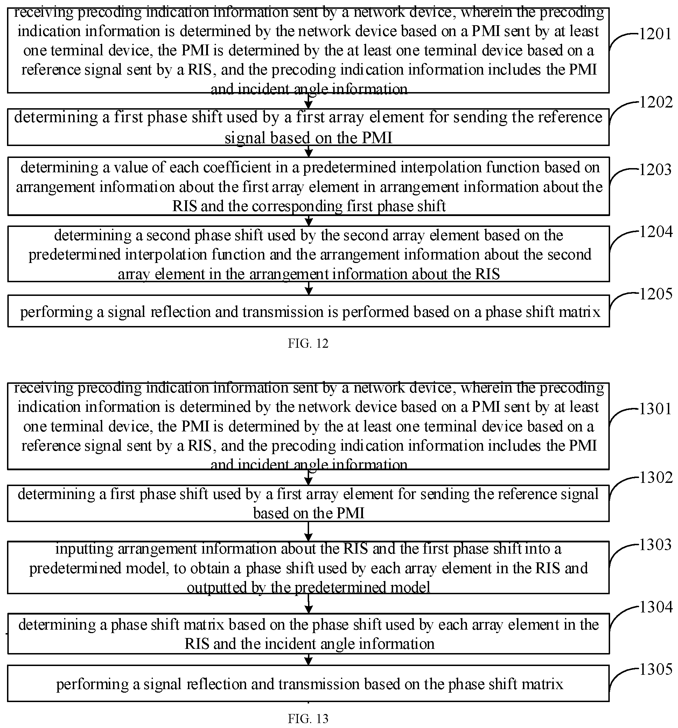

FIG. 12 is a flow chart of a RIS precoding method according to the embodiment of the present disclosure, and this method is executed by a RIS. As shown in FIG. 12, the RIS precoding method includes, but not limited to, the following steps.

Step 1201: precoding indication information sent by a network device is received. The precoding indication information is determined by the network device based on a PMI sent by at least one terminal device, and the PMI is determined by the at least one terminal device based on a reference signal sent by the RIS. The precoding indication information includes the PMI and incident angle information.

Step 1202: a first phase shift used by a first array element for sending the reference signal is determined based on the PMI.

In the embodiments of the present disclosure, a specific implementation procedure of Steps 1201 and 1202 may refer to the detailed description in any embodiment of the present disclosure, and thus will not be particularly defined herein.

Step 1203: a value of each coefficient in a predetermined interpolation function is determined based on arrangement information about the first array element in arrangement information about the RIS and the corresponding first phase shift.

The arrangement information about the RIS includes the arrangement information about the first array element and arrangement information about a second array element. The arrangement information includes a row number and a column number of each array element, or includes a distance and an angle of each array element relative to a reference array element (or positioning array element).

In the embodiments of the present disclosure, various interpolation functions are stored in the network device, and in a case that the RIS needs to be precoded based on the PMI corresponding to a part of RIS array elements, one predetermined interpolation function is selected based on a practical need, so as to calculate a second phase shift used by the second array element.

Different RISs have different reflection angles, so the applicable interpolation functions may be different. In the embodiments of the present disclosure, the value of each coefficient in the predetermined interpolation function may be determined at first based on the arrangement information about the first array element using the known first phase shift.

Optionally, the RIS selects the first phase shift corresponding to several first array elements based on the quantity of coefficients included in the to-be-calculated interpolation function, so as to calculate the value of each coefficient in the interpolation function.

Alternatively, the RIS also determines at first the first array element associated with each second array element, and then calculates the value of each coefficient in the predetermined interpolation function corresponding to the second array element based on the determined first array element. In other words, for different second array elements, the values of each coefficient in the predetermined interpolation function obtained by calculation may be different. The predetermined interpolation function maybe a linear or non-linear function.

In addition, the first array element associated with the second array element may be a first array element in the RIS which is spaced apart from the second array element by a distance smaller than a predetermined threshold, or a first array element determined based on a predetermined rule, e.g., a first array element within a designated range in a designated direc tion of the second array element, or a designated quantity of first array elements ranked in an ascending order of distances, which will not be particularly defined herein.

Optionally, the RIS determines the value of each coefficient in the predetermined interpolation function based on the arrangement information about two first array elements and the corresponding first phase shift.

For example, it is presumed that the predetermined interpolation function is θ=kx+by, where θ is a phase shift value corresponding to an array element, x is a row number corresponding to the array element, and y is a column number corresponding to the array element. The arrangement information about two first array elements indicates an array element in a first row and a first column and an array element in the first row and a fourth column, a first phase shift corresponding to the array element in the first row and the first column is 0°, and a first phase shift corresponding to the array element in the first row and the fourth column is 40°. The arrangement information corresponding to the two first array elements and the first phase shifts are substituted into the interpolation function, i.e., coordinates (1,1,0) and (1,4,40) are substituted into the interpolation function, and it may be determined that the parameter k is 0 and the parameter b is 10 in the interpolation function.

Optionally, the RIS also determines the value of each coefficient in the predetermined interpolation function based on the arrangement information about more than two first array elements and the corresponding first phase shift.

For example, in a case that the predetermined interpolation function has the above-mentioned form, the network device may divide more than two first array elements into groups so as to generate multiple first array element groups each including two first array elements, and then determine the value of each coefficient in the predetermined interpolation function based on the first phase shift corresponding to each first array element group and the arrangement information. Hence, multiple values may be determined for each coefficient in the interpolation function. Then, the network device may determine an average value of these values corresponding to each parameter as a final value of each coefficient in the predetermined interpolation function.

Alternatively, in a case that the form of the predetermined interpolation function is not that mentioned hereinabove, e.g., it includes more parameters, the network device may divide multiple first array elements into groups based on the quantity of to-be-solved parameters. For example, in a case that the predetermined interpolation function includes three to-be-solved parameters, the multiple first array elements is divided into groups each including three first array elements, then a group of coefficient values are calculated based on each group of first array elements, and then a final value of the coefficient is determined based on multiple groups of coefficient values.

It should be appreciated that, the examples of the interpolation function are for illustrative purposes only, but shall not be construed as limiting the RIS precoding method provided in the embodiments of the present disclosure.

Optionally, in a case that the interpolation function is a nonlinear function, the fist array element group associated with each second array element may also be determined based on the quantity of parameters included in the interpolation function as well as the arrangement information about the first array element, and then the value of each parameter included in the interpolation function may be determined based on the arrangement information about the first array element in the arrangement information about the RIS and the corresponding first phase shift.

The quantity of first array elements in the first array element group is greater than or equal to the quantity of parameters in the interpolation function, so as to ensure that the RIS accurately determines the value of each parameter in the interpolation function based on the first phase shift corresponding to the first array element group. In a case that the quantity of first array elements in the first array element group is equal to the quantity of parameters in the interpolation function, the arrangement information about each first array element in the first array element group and the corresponding first phase shift are directly substituted into the interpolation function, so as to determine the value of the coefficient in the interpolation function. In a case that the quantity of first array elements in the first array element group is greater than the quantity of parameters in the interpolation function, the first array elements in the first array element group are directly divided into multiple first array element sub-groups, and each first array element sub-group includes the first array elements, the quantity of which is equal to the quantity of parameters. The value of each coefficient in the predetermined interpolation function is determined based on each first array element sub-group and the corresponding first phase shift, so as to determine multiple values of each coefficient in the interpolation function. Then, an average value of the multiple values of each coefficient is determined as a final value of the coefficient in the predetermined interpolation function.

Alternatively, the first array elements may also be selected based on a predetermined rule, e.g., a predetermined quantity of first array elements surrounding each second array element may be selected, and then the value of each coefficient in the nonlinear function may be calculated based on the first phase shifts corresponding to the selected first array elements.

Optionally, the network device may also send the predetermined interpolation function to the RIS, and upon the receipt of the PMI sent by the terminal device, directly send the PMI to the RIS, so that the RIS calculates, by interpolation, the phase shift used by the second array element based on the predetermined interpolation function and the phase shift used by the first array element.

Optionally, the RIS may receive the predetermined interpolation function sent by the network device. Upon the receipt of the precoding indication information including the PMI and the incident angle information sent by the network device, the RIS calculates a phase shift used by the second array element by interpolation based on the predetermined interpolation function and the phase shift used by the first array element.

Step 1204: a second phase shift used by the second array element is determined based on the predetermined interpolation function and the arrangement information about the second array element in the arrangement information about the RIS.

In the embodiments of the present disclosure, after determining the value of each parameter in the predetermined interpolation function, the parameters are substituted into the interpolation function, and then the arrangement information about the second array element is substituted into the interpolation function, so as to determine the second phase shift used by each second array element.

It should be appreciated that, the first array element groups associated with the second array elements are different, so the interpolation functions corresponding to the second array elements may be different too. The interpolation function corresponding to each second array element may be determined based on the first array element group associated with the second array element and the corresponding first phase shift, and then the arrangement information about each second array element may be substituted into the interpolation function corresponding to the second array element, so as to determine the second phase shift used by the second array element in the RIS.

Step 1205: a phase shift matrix is determined based on the first phase shift, the second phase shift and the incident angle information.

Step 1206: a signal reflection and transmission is performed based on the phase shift matrix.

In the embodiments of the present disclosure, a specific procedure of Steps 1205 and 1206 may refer to the detailed description in any embodiment of the present disclosure, and thus will not be particularly defined herein.

In the embodiments of the present disclosure, the RIS receives the precoding indication information sent by the network device, and the precoding indication information is determined based on the PMI sent by the at least one terminal device. In a case that the precoding indication information includes the PMI and the incident angle information, the RIS determines the first phase shift used by the first array element for sending the reference signal based on the PMI, determines the value of each coefficient in the predetermined interpolation function based on the arrangement information about the first array element in the arrangement information about the RIS and the corresponding first phase shift, and determines the second phase shift used by the second array element based on the predetermined interpolation function and the arrangement information about the second array element in the arrangement information about the RIS. Then, the RIS determines the phase shift matrix based on the first phase shift, the second phase shift and the incident angle information, and performs the signal reflection and transmission based on the phase shift matrix. In this way, the network device controls the RIS precoding based on the PMI corresponding to a part of channels for the RIS, so as to reduce a RIS precoding complexity while ensuring that the RIS is precoded accurately.

FIG. 13 is a flow chart of a RIS precoding method according to the embodiment of the present disclosure, and this method is executed by a RIS. As shown in FIG. 13, the RIS precoding method includes, but not limited to, the following steps.

Step 1301: precoding indication information sent by a network device is received. The precoding indication information is determined by the network device based on a PMI sent by at least one terminal device, and the PMI is determined by the at least one terminal device based on a reference signal sent by the RIS. The precoding indication information includes the PMI and incident angle information.

Step 1302: a first phase shift used by a first array element for sending the reference signal is determined based on the PMI.

In the embodiments of the present disclosure, a specific implementation procedure of Steps 1301 and 1302 may refer to the detailed description in any embodiment of the present disclosure, and thus will not be particularly defined herein.

Step 1303: arrangement information about the RIS and the first phase shift are inputted into a predetermined model, to obtain a phase shift used by each array element in the RIS and outputted by the predetermined model.

The predetermined model is used to determine the phase shift used by each array element in the RIS based on phase shift information about a part of array elements and the arrangement information about the RIS. The predetermined model may be an AI network model or the like, which will not be particularly defined herein.

In the embodiments of the present disclosure, the arrangement information about the RIS and the first phase shift are inputted into the predetermined model, and the predetermined model outputs the phase shift used by each array element in the RIS.

Optionally, the RIS further receives the predetermined model sent by the network device, so that the RIS calculates the phase shift used by each array element in the RIS based on the predetermined model and the phase shift used by the first array element upon the receipt of the precoding indication information including the PMI and the incident angle information sent by the network device.

Step 1304: a phase shift matrix is determined based on the phase shift used by each array element in the RIS and the incident angle information.

Step 1305: a signal reflection and transmission is performed based on the phase shift matrix.

In the embodiments of the present disclosure, a specific implementation procedure of Steps 1304 and 1305 may refer to the detailed description in any embodiment of the present disclosure, and thus will not be particularly defined herein.

In the embodiments of the present disclosure, the RIS receives the precoding indication information sent by the network device, and the precoding indication information is determined based on the PMI sent by the at least one terminal device. In a case that the precoding indication information includes the PMI and the incident angle information, the RIS determines the first phase shift used by the first array element for sending the reference signal based on the PMI, and inputs the arrangement information about the RIS and the first phase shift into the predetermined model to obtain the phase shift used by each array element in the RIS and outputted by the predetermined model. Then, the RIS determines the phase shift matrix based on the phase shift used by each array element in the RIS and the incident angle information, and performs the signal reflection and transmission based on the phase shift matrix. In this way, the network device controls the RIS precoding based on the PMI corresponding to a part of channels for the RIS, so as to reduce a RIS precoding complexity while ensuring that the RIS is precoded accurately.

FIG. 14 is a flow chart of a RIS precoding method according to the embodiment of the present disclosure, and this method is executed by a RIS. As shown in FIG. 14, the RIS precoding method includes, but not limited to, the following steps.

Step 1401: precoding indication information sent by a network device is received. The precoding indication information is determined by the network device based on a PMI sent by at least one terminal device, and the PMI is determined by the at least one terminal device based on a reference signal sent by the RIS. The precoding indication information includes a first precoding matrix index and incident angle information.

In the embodiments of the present disclosure, a specific implementation procedure of Step 1401 may refer to the detailed description in any embodiment of the present disclosure, and thus will not be particularly defined herein.

Step 1402: a first precoding matrix corresponding to the first precoding matrix index is determined.

In the embodiments of the present disclosure, in a case that the precoding indication information includes the first precoding matrix index and the incident angle information, the RIS determines the first precoding matrix associated with the first precoding matrix index based on a predetermined mapping relation between precoding matrices and precoding matrix indices. In a case of forwarding, the RIS further needs to consider an incident angle for sending a signal or data to the RIS by the network device, so the precoding matrix is further updated based on the incident angle information about the signal sent by the network device to the RIS, so as to generate the actually available phase shift matrix for the RIS.

Step 1403: a phase shift matrix is determined based on the first precoding matrix and the incident angle information.

Step 1404: a signal reflection and transmission is performed based on the phase shift matrix.

In the embodiments of the present disclosure, a specific procedure of Steps 1403 and 1404 may refer to the detailed description in any embodiment of the present disclosure, and thus will not be particularly defined herein.

In the embodiments of the present disclosure, the RIS receives the precoding indication information sent by the network device, and the precoding indication information is determined based on the PMI sent by the at least one terminal device. In a case that the precoding indication information includes the first precoding matrix index and the incident angle information, the RIS determines the first precoding matrix corresponding to the first precoding matrix index, determines the phase shift matrix based on the first precoding matrix and the incident angle information, and performs the signal reflection and transmission based on the phase shift matrix. In this way, the network device controls the RIS precoding based on the PMI corresponding to a part of channels for the RIS, so as to reduce a RIS precoding complexity while ensuring that the RIS is precoded accurately.

FIG. 15 is a flow chart of a RIS precoding method according to the embodiment of the present disclosure, and this method is executed by a RIS. As shown in FIG. 15, the RIS precoding method includes, but not limited to, the following steps.

Step 1501: a first antenna port, a designated time/frequency domain position and a reference signal are determined based on configuration information sent by a network device for sending the reference signal.

The first antenna port is an antenna port corresponding to a designated array element, i.e., a first array element, and the configuration information includes an antenna port for sending the reference signal and a time/frequency domain resource position for sending the reference signal, which will not be particularly defined herein.

In the embodiments of the present disclosure, considering that the RIS includes a part of active array elements for sending the reference signal for channel estimation, so the network device sends the configuration information for sending the reference signal to the RIS, so as to indicate the RIS to use the designated RIS array element and send the reference signal to the terminal device via the first antenna port at the designated time/frequency domain position.

Optionally, the RIS further determines the first antenna port, the designated time/frequency domain position and the reference signal based on an agreement in a protocol.

Step 1502: the reference signal is sent to the terminal device using the designated RIS array element via the first antenna port at the designated time/frequency domain position.

Step 1503: precoding indication information sent by the network device is received. The precoding indication information is determined by the network device based on a PMI sent by at least one terminal device, and the PMI is determined by the at least one terminal device based on a reference signal sent by the RIS.

Step 1504: a signal reflection and transmission is performed based on the precoding indication information.

In the embodiments of the present disclosure, a specific implementation procedure of Steps 1503 and 1504 may refer to the detailed description in any embodiment of the present disclosure, and thus will not be particularly defined herein.

In the embodiments of the present disclosure, the RIS determines the first antenna port, the designated time/frequency domain position and the reference signal based on the configuration information sent by the network device for sending the reference signal, and sends the reference signal to the terminal device using the designated RIS array element via the first antenna port at the designated time/frequency domain position. Next, the RIS receives the precoding indication information sent by the network device, and the precoding indication information is determined by the network device based on the PMI sent by the at least one terminal device. Then, the RIS performs the signal reflection and transmission based on the precoding indication information. In this way, the network device controls the RIS precoding based on the PMI corresponding to a part of channels for the RIS, so as to reduce a RIS precoding complexity while ensuring that the RIS is precoded accurately.

FIG. 16 is a flow chart of a RIS precoding method according to the embodiment of the present disclosure, and this method is executed by a terminal device. As shown in FIG. 16, the RIS precoding method includes, but not limited to, the following steps.

Step 1601: a reference signal sent by a RIS is received.

In the embodiments of the present disclosure, considering that the RIS includes a part of active array elements for sending the reference signal for channel estimation, so the RIS determines a first antenna port, a designated time/frequency domain position and the reference signal based on indication information in an agreement in a protocol or sent by the network device. The indication information is used to indicate the RIS to send the reference signal to the terminal device using the active array element at the designated time/frequency domain position. Then, the RIS sends the reference signal to the terminal device via the first antenna port at the designated time/frequency domain position.

Step 1602: a PMI is determined based on the reference signal.

In the embodiments of the present disclosure, the terminal device receives and measures the reference signal sent by the active array element in the RIS at a designated time/frequency domain position, and then determines the PMI corresponding to the reference signal based on the reference signal.

Step 1603: the PMI is sent to a network device.

In the embodiments of the present disclosure, the terminal device sends the PMI to the network device. The network device controls the RIS precoding based on the configuration information for sending the reference signal by the RIS and the PMI, i.e., precodes the RIS based on active array element information about the RIS.

In the embodiments of the present disclosure, the terminal device receives the reference signal sent by the RIS, determines the PMI based on the reference signal, and sends the PMI to the network device. In this way, the network device controls the RIS precoding based on the PMI corresponding to a part of channels for the RIS, so as to reduce a RIS precoding complexity while ensuring that the RIS is precoded accurately.

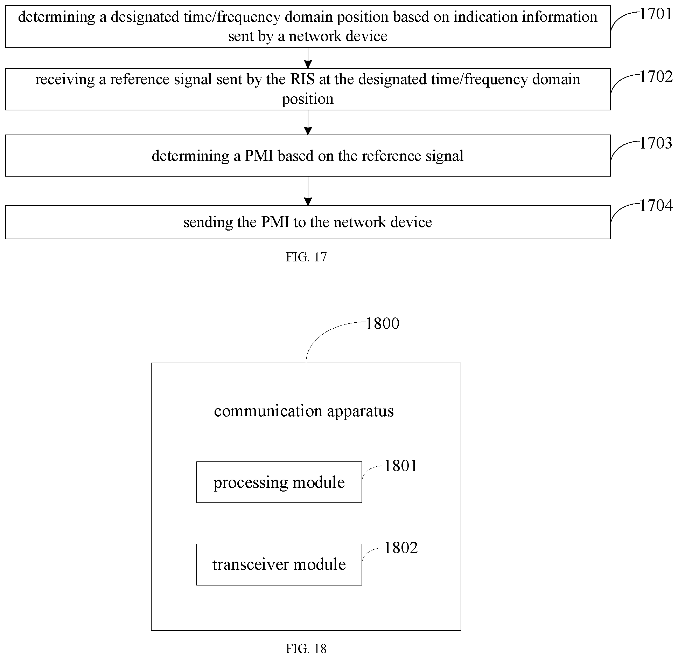

FIG. 17 is a flow chart of a RIS precoding method according to the embodiment of the present disclosure, and this method is executed by a terminal device. As shown in FIG. 17, the RIS precoding method includes, but not limited to, the following steps.

Step 1701: a designated time/frequency domain position is determined based on indication information sent by a network device.

In the embodiments of the present disclosure, the network device sends the indication information to the terminal device, so as to indicate the terminal device to receive the time/frequency domain position for the reference signal sent by the RIS. Hence, the terminal device determines the time/frequency domain position for the reference signal sent by the RIS as the designated time/frequency domain position.

Optionally, the terminal device determines the designated time/frequency domain position based on an agreement in a protocol.

Step 1702: the reference signal sent by the RIS is received at the designated time/frequency domain position.

Step 1703: a PMI is determined based on the reference signal.

Step 1704: the PMI is sent to the network device.

In the embodiments of the present disclosure, a specific implementation procedure of Steps 1703 and 1704 may refer to the detailed description in any embodiment of the present disclosure, and thus will not be particularly defined herein.

In the embodiments of the present disclosure, the terminal device determines the designated time/frequency domain position based on the indication information sent by the network device, receives the reference signal sent by the RIS at the designated time/frequency domain position, determines the PMI based on the reference signal, and sends the PMI to the network device. In this way, the network device controls the RIS precoding based on the PMI corresponding to a part of channels for the RIS, so as to reduce a RIS precoding complexity while ensuring that the RIS is precoded accurately.

FIG. 18 is a schematic view showing a communication apparatus according to the embodiment of the present disclosure. The communication apparatus in FIG. 18 includes a processing module 1801 and a transceiver module 1802. The transceiver module 1802 includes a sending module and/or a reception module, the sending module is configured to achieve a sending function, the reception module is configured to achieve a reception function, and the transceiver module 1802 is configured to achieve the sending function and/or the reception function.

It should be appreciated that, the communication apparatus may be a network device, an apparatus in the network device, or an apparatus capable of being used in combination with the network device.

In a case that the communication apparatus is the network device, the transceiver module 1802 is configured to receive a PMI sent by at least one terminal device, and the PMI is determined by the at least one terminal device based on a reference signal sent by a RIS. The processing module 1801 is configured to send precoding indication information to the RIS based on the at least one PMI.

Optionally, the precoding indication information includes any one of: the PMI and incident angle information; a first precoding matrix index and incident angle information, in which the first precoding matrix index is an index of a precoding matrix generated based on the PMI; or a phase shift matrix index, in which the phase shift matrix index is an index of a precoding phase shift matrix generated based on the PMI and the incident angle information.

Optionally, the processing module 1801 is configured to: determine a first phase shift used by a first array element in the RIS for sending the reference signal based on configuration information for sending the reference signal by the RIS and the PMI; determine a second phase shift used by a second array element in the RIS other than the first array element based on arrangement information about the RIS and the first phase shift; and determine the first precoding matrix index corresponding to a precoding matrix consisting of the first phase shift and the second phase shift based on a predetermined mapping relation between precoding matrix indices and precoding matrices. The transceiver module 1802 is configured to send the first precoding matrix index and the incident angle information to the RIS.

Optionally, ,the processing module 1801 is configured to: determine a first phase shift used by a first array element in the RIS for sending the reference signal based on configuration information for sending the reference signal by the RIS and the PMI; determine a second phase shift used by a second array element in the RIS other than the first array element based on arrangement information about the RIS and the first phase shift; and determine a phase shift matrix based on the first phase shift, the second phase shift and the incident angle information. The transceiver module 1802 is configured to send an index of the phase shift matrix to the RIS.

Optionally, the transceiver module 1801 is configured to: determine a value of each coefficient in a predetermined interpolation function based on arrangement information about the first array element in the arrangement information about the RIS and a corresponding first phase shift; and determine the second phase shift used by the second array element based on the predetermined interpolation function and arrangement information about the second array element in the arrangement information about the RIS.

Optionally, the processing module 1801 is configured to input the arrangement information about the RIS and the first phase shift into a predetermined model, to obtain a phase shift used by each array element in the RIS and outputted by the predetermined model.

Optionally, the transceiver module 1802 is further configured to send the predetermined interpolation function or the predetermined model to the RIS.

Optionally, the transceiver module 1802 is further configured to: send first indication information to the RIS, in which the first indication information is used to indicate the RIS to use a designated RIS array element, and send the reference signal to the at least one terminal device via a first antenna port at a designated time/frequency domain position; and/or send second indication information to the at least one terminal device, in which the second indication information is used to indicate a time/frequency domain position for receiving the reference signal sent by the RIS.

In the embodiments of the present disclosure, the network device receives the PMI sent by the at least one terminal device, and the PMI is determined based on the reference signal sent by the RIS. Then, the network device sends the precoding indication information to the RIS based on the PMI. In this way, the network device controls the RIS precoding based on the PMI corresponding to a part of channels for the RIS, so as to reduce a RIS precoding complexity while ensuring that the RIS is precoded accurately.

It should be appreciated that, the communication apparatus may be a RIS, an apparatus in the RIS, or an apparatus capable of being used in combination with the RIS.

In a case that the communication apparatus is the RIS, the transceiver module 1802 is configured to receive precoding indication information sent by a network device, and the precoding indication information is determined by the network device based on a PMI sent by at least one terminal device, and the PMI is determined by the at least one terminal device based on a reference signal sent by the RIS. The processing module 1801 is configured to perform a signal reflection and transmission based on the precoding indication information.

Optionally, the precoding indication information includes any one of: the PMI and incident angle information; a first precoding matrix index and incident angle information, in which the first precoding matrix index is an index of a precoding matrix generated based on the PMI; or a phase shift matrix index, in which the phase shift matrix index is an index of a precoding phase shift matrix generated based on the PMI and the incident angle information.

Optionally, the processing module 1801 is configured to: in a case that the precoding indication information includes the PMI and the incident angle information, determine a first phase shift used by a first array element for sending the reference signal based on the PMI; determine a second phase shift used by a second array element in the RIS other than the first array element based on arrangement information about the RIS and the first phase shift; determine a phase shift matrix based on the first phase shift, the second phase shift and the incident angle information; and perform the signal reflection and transmission based on the phase shift matrix.

Optionally, the processing module 1801 is configured to: determine a value of each coefficient in a predetermined interpolation function based on arrangement information about the first array element in the arrangement information about the RIS and a corresponding first phase shift; and determine the second phase shift used by the second array element based on the predetermined interpolation function and arrangement information about the second array element in the arrangement information about the RIS.

Optionally, the processing module 1801 is configured to input the arrangement information about the RIS and the first phase shift into a predetermined model, to obtain a phase shift used by each array element in the RIS and outputted by the predetermined model.

Optionally, the transceiver module 1802 is further configured to receive the predetermined interpolation function or the predetermined model sent by the network device.

Optionally, the processing module 1801 is configured to: in a case that the precoding indication information includes the first precoding matrix index and the incident angle information, determine a first precoding matrix corresponding to the first precoding matrix index; determine a phase shift matrix based on the first precoding matrix and the incident angle information; and perform the signal reflection and transmission based on the phase shift matrix.

Optionally, the transceiver module 1802 is further configured to send the reference signal to the at least one terminal device using a designated RIS array element via a first antenna port at a designated time/frequency domain position.

Optionally, the processing module 1801 is further configured to: determine the first antenna port, the designated time/frequency domain position and the reference signal based on configuration information sent by the network device for sending the reference signal; or determine the first antenna port, the designated time/frequency domain positon and the reference signal based on an agreement in a protocol.

In the embodiments of the present disclosure, the RIS receives the precoding indication information sent by the network device, and the precoding indication information is determined based on the PMI sent by the at least one terminal device. Then, the RIS performs the signal reflection and transmission based on the precoding indication information. The PMI is determined by the terminal device based on the reference signal sent by the RIS. In this way, the network device controls the RIS precoding based on the PMI corresponding to a part of channels for the RIS, so as to reduce a RIS precoding complexity while ensuring that the RIS is precoded accurately.

It should be appreciated that, the communication apparatus may be a terminal device, an apparatus in the terminal device, or an apparatus capable of being used in combination with the terminal device.

In a case that the communication apparatus is the terminal device, the transceiver module 1802 is configured to receive a reference signal sent by a RIS, and the processing module 1801 is configured to determine a PMI based on the reference signal. The transceiver module 1802 is further configured to send the PMI to the network device.

Optionally, the transceiver module 1802 is configured to receive the reference signal sent by the RIS at a designated time/frequency domain position.

Optionally, the processing module 1801 is further configured to: determine the designated time/frequency domain position based on indication information sent by the network device; or determine the designated time/frequency domain positon based on an agreement in a protocol.

In the embodiments of the present disclosure, the terminal device receives the reference signal sent by the RIS, determines the PMI based on the reference signal, and then sends the PMI to the network device. In this way, the network device controls the RIS precoding based on the PMI corresponding to a part of channels for the RIS, so as to reduce a RIS precoding complexity while ensuring that the RIS is precoded accurately.

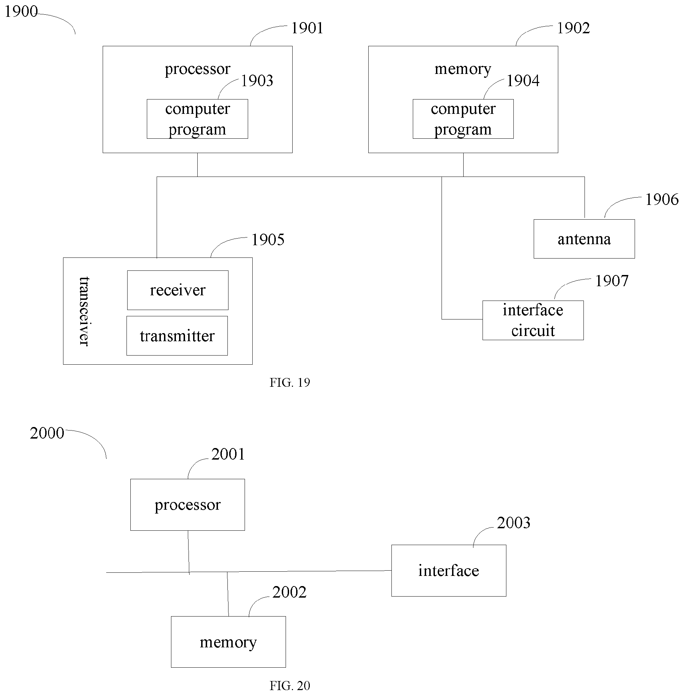

FIG. 19 is a schematic view showing another communication apparatus according to the embodiment of the present disclosure. The communication apparatus may be a network device, a RIS, a terminal device, or a chip, a chip system or a processor which supports the network device to achieve the above-mentioned method, or a chip, a chip system or a processor which supports the RIS to achieve the above-mentioned method, or a chip, a chip system or a processor which supports the terminal device to achieve the above-mentioned method. The apparatus is used to achieve the above-mentioned method, which will not be particularly defined herein.

The communication apparatus may include one or more processors 1901. The processor 1901 may be a general-purpose processor or special-purpose processor, e.g., a baseband processor or a central processing unit. The baseband processor is configured to process a communication protocol as well as communication data, and the central processing unit is configured to control the communication apparatus (e.g., a base station, a baseband chip, a terminal device, a terminal device chip, a Distributed Unit (DU) or a Centralized Unit (CU)), execute a computer program, and process data in the computer program.

Optionally, the communication apparatus further includes one or more memories 1902 storing therein a computer program 1904. The computer program 1904 is executed by the processor 1901, so that the communication apparatus1900 executes the above-mentioned method. Optionally, the memory 1902 further stores therein data. The communication apparatus 1900 is arranged independent of, or integrated with, the memory 1902.

Optionally, the communication apparatus further includes a transceiver 1905 and an antenna 1906. The transceiver 1905 is also called as a transceiver unit, a transceiver machine or a transceiver circuit, and it is configured to achieve a transmission function and a reception function. The transceiver 1905 includes a receiver and a transmitter. The receiver is called as a receiving machine or a reception circuit, and it is configured to achieve the reception function. The transmitter is called as a transmitting machine or a transmission circuit, and it is configured to achieve the transmission function.

Optionally, the communication apparatus further includes one or more interface circuits 1907. The interface circuit 1907 is configured to receive a code instruction and transmit it to the processor 1901. The processor 1901 executes the code instruction, so that the communication apparatus 1900 implements the above-mentioned method.

In a case that the communication apparatus is a network device, the processor 1901 is configured to execute Step 202 in FIG. 2, Steps 302, 303, 304 and 305 in FIG. 3, Steps 402, 403, 404 and 405 in FIG. 4, Steps 502, 503, 504 and 505 in FIG. 5, Steps 602, 603 and 604 in FIG. 6, Step 703 in FIG. 7, Step 803 in FIG. 8, and Step 904 in FIG. 9.

In a case that the communication apparatus is a RIS, the transceiver 1905 is configured to execute Step 1001 in FIG. 10, Step 1101 in FIG. 11, Step 1201 in FIG. 12, Step 1301 in FIG. 13, Step 1401 in FIG. 14, and Step 1503 in FIG. 15.

In a case that the communication apparatus is a terminal device, the transceiver 1905 is configured to execute Steps 1601 and 1603 in FIG. 16, and Steps 1702 and 1704 in FIG. 17.

In one embodiment of the present disclosure, the processor 1901 may include a transceiver for achieving a reception function and a transmission function. For example, the transceiver is a transceiver circuit, an interface, or an in terface circuit. The transceiver circuit, the interface or the interface circuit for achieving the reception function and the transmission function may be arranged separately, or integrated with each other. The transceiver circuit, the interface or the interface c ircuit is configured to read and write codes/data, or transmit or transfer signals.

In one embodiment of the present disclosure, the processor 1901 stores therein a computer program 1903, and the computer program 1903 is executed by the processor 1901, so that the communication apparatus 1900 implements the above-mentioned method. The computer program 1903 may be programmed in the processor 1901, and in this case, the processor 1901 may be implemented through hardware.

In one embodiment of the present disclosure, the communication apparatus 1900 includes a circuit for implementing the above-mentioned transmission, reception or communication function. The processor and the transceiver described in the embodiments of the present disclosure may be implemented in an Integrated Circuit (IC), an analog IC, a Radio Frequency IC (RFIC), a mixed-signal IC, an Application Specific Integrated Circuit (ASIC), a Printed Circuit Board (PCB) or an electronic device. The processor and the transceiver may also be manufactured through various IC processes, e.g., Complementary Metal Oxide Semiconductor (CMOS), nMetal-oxide-semiconductor (NMOS), positive channel metal oxide semiconductor (PMOS), bipolar junction transistor (BJT), bipolar CMOS (BiCMOS), silicon germanium (SiGe), gallium arsenide (GaAs), etc.

The communication apparatus mentioned hereinabove may be a network device or an intelligent relay, but the scope of the communication apparatus is not limited thereto. In addition, a structure of the communication apparatus may not be limited by FIG. 19. The communication apparatus may be an independent device, or a part of a large device. For example, the communication apparatus may be: (1) an independent IC, chip, chip system or chip sub-system; (2) a set of one or more ICs (optionally, the IC set also includes a memory member for storing therein data and a computer program; (3) an ASIC, e.g., a Modem; (4) a module capable of being embedded into the other device; (5) a receiver, a terminal device, a smart terminal device, a cellular phone, a wireless device, a handheld device, a mobile unit, a vehicle-mounted device, a network device, a cloud device, an artificial intelligence device, etc.; or (6) the other device.

In a case that the communication apparatus is a chip or a chip system, as shown in FIG. 20, the chip includes a processor 2001 and an interface 2003. There may exist one or more processors 2001, and one or more interfaces 2003.

In a case that the chip is used to achieve the functions of the network device in the embodiments of the present disclosure, the interface 2003 is configured to execute Step 201 in FIG. 2, Step 301 in FIG. 3, Step 401 in FIG. 4, Steps 501 and 506 in FIG. 5, Steps 601 and 605 in FIG. 6, Steps 701 and 702 in FIG. 7, Steps 801 and 802 in FIG. 8, and Steps 901, 902 and 903 in FIG. 9.

In a case that the chip is used to achieve the functions of the RIS in the embodiments of the present disclosure, the interface 2003 is used to execute Step 1001 in FIG. 10, Step 1101 in FIG. 11, Step 1201 in FIG. 12, Step 1301 in FIG. 13, Step 1401 in FIG. 14, and Step 1503 in FIG. 15.

In a case that the chip is used to achieve the functions of the terminal device in the embodiments of the present disclosure, the interface 2003 is used to execute Steps 1601 and 1603 in FIG. 16, and Steps 1702 and 1704 in FIG. 17.

Optionally, the chip further includes a memory 2003 for storing therein necessary computer programs and data.

It should be appreciated that, various illustrative logical blocks and steps listed in the embodiments of the present disclosure may be implemented through electronic hardware, computer software, or a combination thereof. Whether these functions are implemented through hardware or software depends on design requirements on an entire system and specific applications. For each specific application, various methods are used to achieve the function, which however shall not be construed as going beyond the scope of the present disclosure.

The present disclosure further provides in some embodiments a readable storage medium storing therein an instruction. The instruction is executed by a computer so as to achieve the functions in any of the above-mentioned method embodiments.

The present disclosure further provides in some embodiments a computer program product. The computer program product is executed by a computer so as to achieve the functions in any of the above-mentioned method embodiments.

In the above-mentioned embodiments of the present disclosure, all of, or a part of, the modules are implemented in the form of software, hardware, firmware or a combination thereof. When the modules are implemented in the form of software, all of, or a part of, the modules are implemented in the form of a computer program product. The computer program product includes one or more computer programs. When the computer programs are loaded onto and executed by a computer, all of, or a part of, the processes or functions in the embodiments of the present disclosure are generated by the computer. The computer may be a general-purpose computer, a special-purpose computer, a computer network, or any other programmable device. The computer program may be stored in a computer-readable storage medium, or transferred from one computer-readable storage medium to another computer-readable storage medium, e.g., transferred from one website, one computer, one server or one data center to another website, another computer, another server or another data center in a wired manner (e.g., through a co-axial cable, an optical fiber, or a digital subscriber line (DSL)) or a wireless manner (e.g., infrared, cordless or microwave). The computer-readable storage medium may be any available medium capable of being accessed by a computer, or a data storage device, e.g., a server or a data center including one or more available mediums. The available medium may be a magnetic medium (e.g., a floppy disc, a hard disc or magnetic tape), an optical medium (e.g., a digital video disc (DVD)), or a semiconductor medium (e.g., a solid state disk (SSD)).

It should be appreciated that, such words as "first" and "second" are used to differentiate the items from each other, but shall not be construed as limiting the scope of the present disclosure or indicating any sequence.

The expression "at least one" is used to indicate one or more, e.g., two, three, four or more, which will not be particularly defined herein. In the embodiments of the present disclosure, for technical features of a same kind, the words "first", "second", "third", "A", "B", "C" and "D" are used to differentiate these technical features, without indicating any sequence or sizes thereof.

The correspondence shown in each table in the present disclosure may be configured or predefined. Values of information in each table are for illustrative purposes only, and any other values may also be configured, which will not be particularly defined herein. In a case of configuring the correspondence between the information and parameters, it is not necessary to configure all the correspondences in the table. For example, in the table in the embodiments of the present disclosure, correspondences shown in some rows may not be configured. For another example, appropriate deformation or adjustment may be performed based on the table, e.g., splitting or combination. A name of each parameter in each table may use the other name capable of being understood by the communication apparatus, and a value of the parameter or a presentation mode thereof may also use that capable of being understood by the communication apparatus. During the implementation of each table, the other data structure may also be used, e.g., array, queue, container, stack, linear table, pointer, linked list, tree, map, structure, class, heap, or hash table.

The term "predefined" in the embodiments of the present disclosure may be understood as "defined", "defined in advance", "stored", "pre-stored", "pre-negotiated", "preconfigured", "programmed" or "pre-programed".

It should be appreciated that, units and algorithm steps for instances described in the embodiments of the present disclosure may be implemented in the form of electronic hardware, or a combination of a computer program and the electronic hardware. Whether or not these functions are executed by hardware or software depends on specific applications or design constraints of the technical solution. Different methods may be adopted with respect to the specific applications so as to achieve the described functions, without departing from the scope of the present disclosure.

It should be further appreciated that, for convenience and clarification, operation procedures of the system, apparatus and units described hereinabove may refer to the corresponding procedures in the method embodiments, and thus will not be particularly defined herein.

The above embodiments are merely for illustrative purposes, but shall not be construed as limiting the scope of the present disclosure. Any person skilled in the art may make modifications and substitutions without departing from the spirit of the present disclosure, and these modifications and substitutions shall also fall within the scope of the present disclosure. Hence, the scope of the present disclosure shall be subject to the scope defined by the appended claims.

## Claims

1. A Reconfigurable Intelligence Surface (RIS) precoding method, executed by a network device, comprising:
receiving a Precoding Matrix Indicator (PMI) sent by at least one terminal device, wherein the PMI is determined by the at least one terminal device based on a reference signal sent by a RIS; and
sending precoding indication information to the RIS based on the PMI.

2. The RIS precoding method of claim 1, wherein the precoding indication information comprises any one of:
the PMI and incident angle information;
a first precoding matrix index and incident angle information, wherein the first precoding matrix index is an index of a precoding matrix generated based on the PMI; or
a phase shift matrix index, wherein the phase shift matrix index is an index of a precoding phase shift matrix generated based on the PMI and the incident angle information.

3. The RIS precoding method of claim 2, wherein the sending the precoding indication information to the RIS based on the PMI comprises:
determining a first phase shift used by a first array element in the RIS for sending the reference signal based on configuration information for sending the reference signal by the RIS and the PMI;
determining a second phase shift used by a second array element in the RIS other than the first array element based on arrangement information about the RIS and the first phase shift;
determining the first precoding matrix index corresponding to a precoding matrix consisting of the first phase shift and the second phase shift based on a predetermined mapping relation between precoding matrix indices and precoding matrices; and
sending the first precoding matrix index and the incident angle information to the RIS.

4. The RIS precoding method of claim 2, wherein the sending the precoding indication information to the RIS based on the PMI comprises:
determining a first phase shift used by a first array element in the RIS for sending the reference signal based on configuration information for sending the reference signal by the RIS and the PMI;
determining a second phase shift used by a second array element in the RIS other than the first array element based on arrangement information about the RIS and the first phase shift;
determining a phase shift matrix based on the first phase shift, the second phase shift and the incident angle information; and
sending an index of the phase shift matrix to the RIS.

5. The RIS precoding method of claim 3 or 4, wherein the determining the second phase shift used by the second array element in the RIS other than the first array element based on the arrangement information about the RIS and the first phase shift comprises:
determining a value of each coefficient in a predetermined interpolation function based on arrangement information about the first array element in the arrangement information about the RIS and a corresponding first phase shift; and
determining the second phase shift used by the second array element based on the predetermined interpolation function and arrangement information about the second array element in the arrangement information about the RIS.

6. The RIS precoding method of claim 3 or 4, wherein the determining the second phase shift used by the second array element in the RIS other than the first array element based on the arrangement information about the RIS and the first phase shift comprises:
inputting the arrangement information about the RIS and the first phase shift into a predetermined model, to obtain a phase shift used by each array element in the RIS and outputted by the predetermined model.

7. The RIS precoding method of claim 5 or 6, further comprising:
sending the predetermined interpolation function or the predetermined model to the RIS.

8. The RIS precoding method of any one of claims 1 to 7, further comprising:
sending first indication information to the RIS, wherein the first indication information is used to indicate the RIS to use a designated RIS array element, and send the reference signal to the at least one terminal device via a first antenna port at a designated time/frequency domain position; and/or
sending second indication information to the at least one terminal device, wherein the second indication information is used to indicate a time/frequency domain position for receiving the reference signal sent by the RIS.

9. A Reconfigurable Intelligence Surface (RIS) precoding method, executed by a RIS, comprising:
receiving precoding indication information sent by a network device, wherein the precoding indication information is determined by the network device based on a PMI sent by at least one terminal device, and the PMI is determined by the at least one terminal device based on a reference signal sent by the RIS; and
performing a signal reflection and transmission based on the precoding indication information.

10. The RIS precoding method of claim 9, wherein the precoding indication information comprises any one of:
the PMI and incident angle information;
a first precoding matrix index and incident angle information, wherein the first precoding matrix index is an index of a precoding matrix generated based on the PMI; or
a phase shift matrix index, wherein the phase shift matrix index is an index of a precoding phase shift matrix generated based on the PMI and the incident angle information.

11. The RIS precoding method of claim 10, wherein the performing the signal reflection and transmission based on the precoding indication information comprises:
in a case that the precoding indication information comprises the PMI and the incident angle information, determining a first phase shift used by a first array element for sending the reference signal based on the PMI;
determining a second phase shift used by a second array element in the RIS other than the first array element based on arrangement information about the RIS and the first phase shift;
determining a phase shift matrix based on the first phase shift, the second phase shift and the incident angle information; and
performing the signal reflection and transmission based on the phase shift matrix.

12. The RIS precoding method of claim 11, wherein the determining the second phase shift used by the second array element in the RIS other than the first array element based on the arrangement information about the RIS and the first phase shift comprises:
determining a value of each coefficient in a predetermined interpolation function based on arrangement information about the first array element in the arrangement information about the RIS and a corresponding first phase shift; and
determining the second phase shift used by the second array element based on the predetermined interpolation function and arrangement information about the second array element in the arrangement information about the RIS.

13. The RIS precoding method of claim 11, wherein the determining the second phase shift used by the second array element in the RIS other than the first array element based on the arrangement information about the RIS and the first phase shift comprises:
inputting the arrangement information about the RIS and the first phase shift into a predetermined model, to obtain a phase shift used by each array element in the RIS and outputted by the predetermined model.

14. The RIS precoding method of claim 12 or 13, further comprising:
receiving the predetermined interpolation function or the predetermined model sent by the network device.

15. The RIS precoding method of claim 10, wherein the performing the signal reflection and transmission based on the precoding indication information comprises:
in a case that the precoding indication information comprises the first precoding matrix index and the incident angle information, determining a first precoding matrix corresponding to the first precoding matrix index;
determining a phase shift matrix based on the first precoding matrix and the incident angle information; and
performing the signal reflection and transmission based on the phase shift matrix.

16. The RIS precoding method of any one of claims 9 to 15, further comprising:
sending the reference signal to the at least one terminal device using a designated RIS array element via a first antenna port at a designated time/frequency domain position.

17. The RIS precoding method of claim 16, further comprising:
determining the first antenna port, the designated time/frequency domain position and the reference signal based on configuration information sent by the network device for sending the reference signal; or
determining the first antenna port, the designated time/frequency domain positon and the reference signal based on an agreement in a protocol.

18. A Reconfigurable Intelligence Surface (RIS) precoding method, executed by a terminal device, comprising:
receiving a reference signal sent by a RIS;
determining a PMI based on the reference signal; and
sending the PMI to a network device.

19. The RIS precoding method of claim 18, wherein the receiving the reference signal sent by the RIS comprises:
receiving the reference signal sent by the RIS at a designated time/frequency domain position.

20. The RIS precoding method of claim 19, further comprising:
determining the designated time/frequency domain position based on indication information sent by the network device; or
determining the designated time/frequency domain positon based on an agreement in a protocol.

21. A communication apparatus, comprising:
a transceiver module configured to receive a PMI sent by at least one terminal device, wherein the PMI is determined by the at least one terminal device based on a reference signal sent by a RIS; and
a processing module configured to send precoding indication information to the RIS based on the PMI.

22. A communication apparatus, comprising:
a transceiver module configured to receive precoding indication information sent by a network device, wherein the precoding indication information is determined by a network device based on a PMI sent by at least one terminal device, and the PMI is determined by the at least one terminal device based on a reference signal sent by a RIS; and
a processing module configured to perform a signal reflection and transmission based on the precoding indication information.

23. A communication apparatus, comprising:
a transceiver module configured to receive a reference signal sent by a RIS; and
a processing module configured to determine a PMI based on the reference signal,
wherein the transceiver module is further configured to send the PMI to a network device.

24. A communication system, comprising a network device, a RIS and a terminal device, wherein the network device is configured to execute the RIS precoding method of any one of claims 1 to 9, the RIS is configured to execute the RIS precoding method of any one of claims 9 to 17, and the terminal device is configured to execute the RIS precoding method of any one of claims 18 to 20.

25. A communication apparatus, comprising a processor and a memory, wherein the memory is configured to store therein a computer program, and the processor is configured to execute the computer program in the memory so as to execute the RIS precoding method of any one of claims 1 to 20.

26. A computer-readable storage medium storing therein an instruction, wherein the instruction is execute to implement the RIS precoding method of any one of claims 1 to 20.
